# EUROPÄISCHE PATENTSCHRIFT

(11) **EP 2 701 909 B1**
(45) Veröffentlichungstag und Bekanntmachung des Hinweises auf die Patenterteilung: **29.07.2015**
(21) Anmeldenummer: 12717623.8
(22) Anmeldetag: 28.03.2012
(51) Int. Cl.: B32B 29/06, D21H 19/80, D21H 27/30, D21H 27/42

(54) **VORRICHTUNG UND VERFAHREN ZUR HERSTELLUNG EINES MEHRLAGIGEN VERPACKUNGSPAPIERS**
DEVICE AND METHOD FOR PRODUCING A MULTI-LAYER PACKAGING PAPER
DISPOSITIF ET PROCÉDÉ DE FABRICATION D'UN PAPIER D'EMBALLAGE MULTICOUCHE

(30) Priorität: 29.03.2011 DE 102011001617
(43) Veröffentlichungstag der Anmeldung: 05.03.2014
(73) Patentinhaber: Hamburger Rieger GmbH, 83308 Trostberg (DE)
(72) Erfinder: NOSS, Andreas, 83308 Trostberg (DE); HAGEN, Jan-Oliver, 84489 Burghausen (DE)
(74) Vertreter: Wittmann, Ernst-Ulrich
(86) Internationale Anmeldenummer: PCT/EP2012/055566
(87) Internationale Veröffentlichungsnummer: WO 2012/130908

(56) Entgegenhaltungen:
- WO-A1-96/28609
- US-A- 4 301 210
- US-A- 5 169 715
- US-A- 5 753 077
- US-A1- 2007 202 283
- US-A1- 2007 237 910
- US-A1- 2010 310 776

## Beschreibung

Die vorliegende Erfindung betrifft ein mehrlagiges Verpackungspapier, insbesondere Verpackungspapier wie es zur Wellpappenherstellung sowie im Pre- und Post-printverfahren, insbesondere im Bereich des Flexodrucks verwendet wird. Zusätzlich betrifft die Erfindung ein Verfahren zur Herstellung des Verpackungs-papiers und die Verwendung des Verpackungspapiers zur Wellpappenherstellung und insbesondere als Surrogat für White Top Liner.

Mehrlagiges Verpackungspapier ist im Stand der Technik bekannt und findet meist als Wellenstoff, Testliner und White Top Liner Anwendung, um beispielsweise im Endprodukt die verpackten Waren vor Beschädigungen zu schützen und mittels Bedruckbarkeit dem Verbraucher die verpackten Waren auch optisch zu präsentieren.

Der Aufbau solcher Verpackungspapiere besteht aus Schichten mit unterschiedlichen Stoffmischungen, welche unterschiedlichste Funktionen, wie beispielsweise Festigkeit und Volumen zum Schutz der eingepackten Ware, optische Eigenschaften zu Präsentationszwecken, sowie Ver- und Bedruckbarkeitseigenschaften erfüllen.

Im Stand der Technik werden Verpackungspapiere mit weißer und brauner Oberfläche unterschieden.

So betrifft die US 2007/237910 A1 einen Druckträger mit einem mehrschichtigen Aufbau, wobei die erste Schicht ein anorganisches Pigment und die zweite Schicht ein Vielzahl von Wachspartikel aufweist. Die US 5 753 077 A betrifft ein Druckpapier mit einer Flächenbezogenen Masse zwischen 30 und 60 g/m², welches aus deinkten recycelten Fasern, mineralischen Füllstoff und Zellstoff bzw. Cellulose hergestellt wird. Darüber hinaus ist die US 2010 310 776 A1 bekannt, welche ein Verfahren zur Verbesserung der Barriereeigenschaften von Papier und Pappen betrifft. Als weiterer Stand der Technik ist ferner die US 5 169 715 A bekannt, welche ein Hochglanzpapier und dessen Herstellung betrifft, wobei das entsprechende Papier mit einen Strich versehen ist, welcher insbesondere eine Glanzpigment aufweist. Schließlich ist auch die US 4 301 210 A bekannt, welche die Herstellung einen gussgestrichenen Papiers betrifft.

Mitunter erfolgt der Einsatz weißer Oberflächen überwiegend für Anwendungen im bedruckbaren Produktbereich.

Die angespannte Rohstoff-Situation in der heutigen Papierindustrie zeigt eine abnehmende Verfügbarkeit weißer Faserstoffe, insbesondere für den Einsatz in Deckschichten von Verpackungspapieren bei steigenden Rohstoffpreisen und großen Qualitätsschwankungen Dies führt zu einer ständigen Produkt- und Produktionsoptimierung und einer allgemeinen Nachfrage hinsichtlich Einsparungen an Rohstoffkosten und von Energieverbräuchen.

Obgleich derartige Verpackungspapiere zwar jeweils die zuvor genannten Anforderungen entsprechend Ihrem Einsatzzweck erfüllen, besteht für ein universell einsetzbares Verpackungspapier sowie für besondere Anwendungsfälle Verbesserungsbedarf. So ist beispielsweise gerade im Bereich Marketing und bedruckbarer Verpackungen ein verstärkter Einsatz hochweißer Verpackungspapiere als auch neue Einsatzbereiche in der Werbung oder auch als Substitution bestehender Produkte denkbar.

Vor diesem Hintergrund hat es die vorliegende Erfindung die Aufgabe ein mehr-lagiges Verpackungspapier zur Verfügung zu stellen, welches die Nachteile bekannter Verpackungspapiere zumindest teilweise überwindet und insbesondere Einsparungen von weißem Faserstoffmaterial ermöglicht und verbesserte Ver- und/oder Bedruckbarkeitselgenschaften insbesondere auch ein verbessertes Druckfarbentrocknungsverhaltens im Postprintbereich erreicht.

Die vorstehende Aufgabe wird durch das erfindungsgemäße Verpackungspapier gemäß Anspruch 1, das Verfahren zur Herstellung des Verpackungspapiers und die spezifische Verwendung des Verpackungspapiers gelöst. Bevorzugte Ausführungs-formen sind Gegenstand der Unteransprüche.

Das erfindungsgemäße mehrlagige Verpackungspapier, insbesondere als Testliner für die Wellpappenherstellung hat eine flächenbezogene Masse nach DIN EN ISO 536 von 100 bis 200 g/m² und weist ein Rohpapier auf, welches eine Grundschicht mit einer ersten Stoffmischung mit Faserstoffen der Gruppe 1 und 4 nach CEN European Standard EN 643:2001 und eine Deckschicht mit einer zweiten Stoff-mischung mit Faserstoffen der Gruppe 2 und 3 nach CEN European Standard EN 643:2001 und Füllstoff und deinktem Altpapierstoff oder CTMP zur Erzeugung eines Rohpapiers mit spezifischen Berstdruck nach ISO 2759 von 1,85 bis 2,40 kPa * m²/g und einem spezifischen SCT_{quer} nach ISO 9895 von 12 bis 18 kNm / kg und einem

Scott-Bond nach Tappi 569 von 160 bis 320 J/m² und einer D65-Brightness nach ISO 2470-2 von 68 bis 85 % auf der Deckschichtoberseite umfasst.

Erfindungsgemäß weist das Rohpapier wenigstens auf der Oberseite der Deckschicht eine Filmpressenpigmentierung mit einem Strichgewicht von 3 bis 10 g/m², bei einer ersten Streichfarbenzusammensetzung mit einem Feststoffgehalt von 30 bis 70 % und einem synthetischen Bindemittelanteil von 5 bis 30 % bezogen auf einen Pigmentanteil, zur Erzeugung des mehrlagigen Verpackungspapiers mit einer Luftdurchlässigkeit nach Bendtsen gemäß ISO 5636-3 von 50 bis 150 ml/min, einer Rauhigkeit nach Bendtsen gemäß ISO 8791-2 von 150 bis 500 ml/min und einer D65-Brightness nach ISO 2470-2 von 68 bis 85 % auf.

Mit der Filmpressenpigmentierung im Sinne der vorliegenden Erfindung kann ein gleichmäßiger Konturenstrich auf das Rohpapier bzw. die Oberseite der Deckschicht aufgetragen und gezielt Einfluss auf die Oberflächeneigenschaften des Verpackungspapiers genommen werden. Die Oberflächeneigenschaften beinhalten die Abdeckungseigenschaften des Rohpapiers und die Be- und Verdruckbarkeitseigenschaften des Verpackungspapiers womit dieses auch als Druckträger eingesetzt werden kann. Die Filmpressenpigmentierung ermöglicht zudem eine Reduzierung des Einsatzes an kostenintensiven Rohstoffen insbesondere in der Deckschicht bis hin zu einer kompletten Substitution einiger Rohstoffe durch den Pigmentauftrag, wodurch Herstellungskosten verringert werden können.

Hinsichtlich der Be- und Verdruckbarkeitseigenschaften kann mit der vorliegenden Erfindung auch gezielt Einfluss insbesondere auf das Farbtrocknungsverhalten und die Farbübertragung im Druckprozess genommen werden, wodurch der Einsatz des Verpackungspapiers auch bei schnellen Druckmaschinen ermöglicht wird und im Druck geforderte Volltondichten und Tonwertzuwächse erreicht werden.

Grundschicht im Sinne der vorliegenden Erfindung ist die untere Schicht auf welcher die Deckschicht angeordnet und auf dieser die Filmpressenpigmentierung angeordnet ist.

Deckschicht im Sinne der vorliegenden Erfindung ist die Schicht, welche über der Grundschicht angeordnet ist und auf welcher vorzugsweise die Filmpressenpigmentierung angeordnet ist.

Unter Faserstoffen der Gruppe 1 im Sinne der vorliegenden Erfindung wird die Gruppe 1 gemäß der Europäischen Liste der Standardsorten für Altpapier und Pappe nach CEN European Standard EN 643:2001 verstanden, beinhaltend: 1.01 Unsortiertes gemischtes Altpapier, unerwünschte Stoffe entfernt; 1.02 Sortiertes gemischtes Altpapier; 1.03 Graukarton; 1.04 Kaufhausaltpapier; 1.05 Alte Wellpappe Verpackungen; 1.06 Unverkaufte Illustrierte; 1.06.01 Unverkaufte Illustrierte ohne Kleberücken; 1.07 Telefonbücher; 1.08 Zeitungen und Illustrierte 1, gemischt; 1.09 Zeitungen und Illustrierte 2, gemischt; 1.10 Illustrierte und Zeitungen, gemischt; 1.11 Deinkingware.

Unter Faserstoffen der Gruppe 2 im Sinne der vorliegenden Erfindung wird die Gruppe 2 gemäß der Europäischen Liste der Standardsorten für Altpapier und Pappe nach CEN European Standard EN 643:2001 verstanden, beinhaltend: 2.01 Zeitungen; 2.02 Unverkaufte Zeitungen; 2.02.01 Unverkaufte Zeitungen, Flexodruck unzulässig; 2.03 Weiße Späne mit leichtem Andruck; 2.03.01 Weiße Späne mit leichtem Andruck, ohne Kleberücken; 2.04 Weiße Späne, stark bedruckt; 2.04 Weiße Späne, stark bedruckt, ohne Kleberücken; 2.05 Büroaltpapier, sortiert; 2.06 Bunte Akten; 2.07 Weiße Bücher, holzfrei; 2.08 Bunte Illustrierte, holzfrei; 2.09 Selbstdurchschreib-Papiere; 2.10 PE-beschichteter Karton, gebleicht, holzfrei; 2.11 Anderer PE-beschichteter Karton; 2.12 Endlosformulare, holzhaltig.

Unter Faserstoffen der Gruppe 3 im Sinne der vorliegenden Erfindung wird die Gruppe 3 gemäß der Europäischen Liste der Standardsorten für Altpapier und Pappe nach CEN European Standard EN 643:2001 verstanden, beinhaltend: 3.01 Gemischte, hellbunte Druckspäne; 3.02 Gemischte, hellbunte Druckspäne, holzfrei; 3.03 Buchbinderspäne, holzfrei; 3.04 Weiße Späne mit leichtem Andruck, holzfrei; 3.05 Weiße Akten, holzfrei; 3.06 Weiße Geschäftsformulare; 3.07 Weiße Endlosformulare, holzfrei; 3.08 gebleichter Sulfatkarton, bedruckt; 3.09 gebleichter Sulfatkarton, mit leichtem Andruck; 3.10 Multidruck; 3.11 Weißer, mehrlagiger Karton, stark bedruckt; 3.12 Weißer, mehrlagiger Karton mit leichtem Andruck; 3.13 Weißer, mehrlagiger Karton, unbedruckt; 3.14 Weißes Zeitungsdruckpapier; 3.15 weißes gestrichenes und ungestrichenes Papier, holzhaltig; 3.15.01 weißes gestrichenes Papier, holzhaltig; 3.16 weißes gestrichenes Papier, holzfrei, ohne Kleberücken; 3.17 Weiße Späne; 3.18 Weiße Späne, holzfrei; 3.18.01 Weiße ungestrichene Späne, holzfrei; 3.19 Gebleichter Sulfat-Karton, unbedruckt.

Unter Faserstoffen der Gruppe 4 im Sinne der vorliegenden Erfindung wird die Gruppe 4 gemäß der Europäischen Liste der Standardsorten für Altpapier und Pappe nach CEN European Standard EN 643:2001 verstanden, beinhaltend: 4.01 Neue Späne aus Wellpappe; 4.01.01 Unbenutzte Kraftwellpappe; 4.01.02 Unbenutzte Wellpappe; 4.02 Gebrauchte Kraftwellpappe 1; 4.03 Gebrauchte Kraftwellpappe 2; 4.04 Gebrauchte Kraftpapiersäcke; 4.04.01 Gebrauchte Kraftpapiersäcke mit kunststoffbeschichteten Papieren; 4.05 Unbenutzte Kraftpapiersäcke; 4.05.01 Unbenutzte Kraftpapiersäcke mit kunststoffbeschichteten Papieren; 4.06 Gebrauchtes Kraftpapier; 4.07 Unbenutztes Kraftpapier; 4.08 Unbenutzter Krafttragekarton.

Unter CTMP im Sinne der vorliegenden Erfindung wird Faserstoff gewonnen nach dem Chemo Thermo Mechanical Pulp-Verfahren verstanden.

Unter spezifischem Berstdruck im Sinne der vorliegenden Erfindung wird die Bestimmung des spezifischen Berstdrucks, auch Berstfaktor, Berstindex nach ISO 2759 verstanden.

Unter spezifischem SCT_{quer} im Sinne der vorliegenden Erfindung wird die Bestimmung des spezifischen SCT_{quer}-Wertes, auch SCT_{quer}-Index, Streifenstauchwiderstand nach ISO 9895 verstanden.

Unter Scott-Bond im Sinne der vorliegenden Erfindung wird die Bestimmung der Spaltfestigkeit als Scott-Bond nach Tappi 569 verstanden.

Unter D65-Brighness im Sinne der vorliegenden Erfindung wird die Bestimmung des Weißgrads als D65-Brighness nach ISO 2470-2 verstanden.

Unter Deckschichtoberseite bzw. Oberseite der Deckschicht im Sinne der vorliegenden Erfindung wird die Seite des Rohpapiers verstanden auf welche der Auftrag wenigstens einer Filmpressenpigmentierung erfolgt.

Unter Luftdurchlässigkeit nach Bendtsen im Sinne der vorliegenden Erfindung wird die Bestimmung der Luftdurchlässigkeit nach Bendtsen gemäß ISO 5636-3 verstanden.

Unter Rauhigkeit, auch Rauheit nach Bendtsen im Sinne der vorliegenden Erfindung wird die Bestimmung der Rauhigkeit nach Bendtsen gemäß ISO 8791-2 verstanden. In einer weiteren Ausführungsform des erfindungsgemäßen mehrlagigen Verpackungspapiers weist das Rohpapier eine Schonschicht mit einer dritten Stoffmischung mit wenigstens Faserstoffen der Gruppe 2 und 3 nach CEN European Standard EN 643:2001 auf.

Gemäß einer weiteren Ausführungsform können auch weitere Stoffzusammensetzungen der Gruppen 1 und / oder 4 vorzugsweise mit den Stoffzusammensetzungen der Gruppe 2 und / oder 3 als Faserstoffmix verwendet werden.

Schonschicht im Sinne der vorliegenden Erfindung ist die Schicht, welche zwischen Grundschicht und Deckschicht angeordnet ist.

Durch diese Ausführungsform wird eine zusätzliche Möglichkeit zur Abdeckung der braunen Grundschicht zur Verfügung gestellt. Vorteile des Einsatzes einer weiteren Schicht können hier einerseits durch gezielte Eigenschaften dieser Schicht erzielt werden wie beispielsweise Opazität und andererseits ist durch Einsatz kostengünstiger Rohstoffe in der Grundschicht auch eine Einsparung von teurem Rohstoff in der Deckschicht möglich wodurch insgesamt Kosteneinsparungen erzielt werden können.

In einer weiteren Ausführungsform des erfindungsgemäßen mehrlagigen Verpackungspapiers ist der Füllstoff aus einer Gruppe von Materialien ausgewählt, welche Mineralien wie insbesondere Kaoline, Talkum, Calciumcarbonate, insbesondere gefälltes Calziumcarbonat mit einer skalenoedrischen Kristallmodifikation und einer Partikelgrößenverteilung bei größer 90% der Partikel im Bereich von 0,1 bis 5 µm und/oder gemahlenes Calziumcarbonat mit einer Partikelgrößenverteilung der Partikel im Bereich 50 bis 90 % kleiner 2 µm, Calziumsilikate, Titandioxid, Aluminiumhydroxide, Kieselsäuren, Bentonite, Bariumsulfate, synthetische Füllstoffe bzw. Kunststoffteilchen, Farbstoffe, Kombinationen hieraus aufweist.

Unter gefälltem Calziumcarbonat im Sinne der vorliegenden Erfindung wird auch Precipitated Calcium Carbonate verstanden.

Unter gemahlenem Calziumcarbonat im Sinne der vorliegenden Erfindung wird auch Ground Calcium Carbonate verstanden.

In einer weiteren Ausführungsform des erfindungsgemäßen mehrlagigen Verpackungspapiers weist die erste Streichfarbenzusammensetzung einen Feststoffgehalt von 30 bis 70 %, bevorzugt von 55 bis 65 % und besonders bevorzugt von 57 bis 63 % auf.

Durch diese Ausführungsform mit hohen Feststoffgehalten der Streichfarbenzusammensetzung wird zur Trocknung der gestrichenen Oberfläche im Gegensatz zum Auftrag mit niedrigeren Feststoffgehalten weniger Trocknungsenergie benötigt. Vorteilhaft sind hierbei einerseits niedrigere Energiekosten anderseits kann bei vorhandener Trocknungskapazität einer Papiermaschine die Produktionsgeschwindigkeit und damit die Kapazität auch entsprechend gesteigert werden.

In einer weiteren Ausführungsform des erfindungsgemäßen mehrlagigen Verpackungspapiers weist die erste Streichfarbenzusammensetzung einen synthetische Bindemittelanteil von 8 bis 15 %, bevorzugt von 9 bis 13 % und besonders bevorzugt von 10 bis 11 % bezogen auf einen Pigmentanteil auf.

Durch diese Ausführungsform kann über den Bindemittelanteil die Bindung der Pigmente an die Papieroberfläche beeinflusst werden, welches eine der Hauptaufgaben eines Bindemittels ist. So kann beispielsweise für Verpackungspapiere, welche im Anschluss ein oberflächenbeanspruchendes Verfahren, wie beispielsweise Offsetdruck durchlaufen sogenanntes Picking durch die Stärke der Bindung der Pigmente an die Papieroberfläche beeinflusst werden. Vorteil reduzierten Pickings ist ein vermindertes Dusting in der Offsetdruckmaschine. Hieraus resultiert eine geringere Belegung des Drucktuchs, was zu weniger Reinigungsstillständen führt.

In einer weiteren Ausführungsform des erfindungsgemäßen mehrlagigen Verpackungspapiers ist der Pigmentanteil aus einer Gruppe von Materialien ausgewählt, welche Mineralien wie insbesondere Kaoline, insbesondere Kaoline mit einem aspect ratio im Bereich von 10 bis 60 mit einer Partikelgrößenverteilung der Partikel im Bereich von 55 bis 80 % kleiner 2 µm, Talkum, Calciumcarbonate, insbesondere Calciumcarbonate mit einer Partikelgrößenverteilung der Partikel im Bereich 50 bis 90 % kleiner 2 µm, Calziumsilikate, Titandioxid, Aluminiumhydroxide, Kieselsäuren, Bentonite, Bariumsulfate, synthetische Füllstoffe bzw. Kunststoffteilchen, Farbstoffe, Kombinationen hieraus aufweist.

Unter aspect ratio im Sinne der vorliegenden Erfindung wird das Länge- zu Dickeverhältnis vorzugsweise bestimmt nach der Least-Bounding-Methode verstanden.

In einer weiteren Ausführungsform des erfindungsgemäßen mehrlagigen Verpackungspapiers weist eine Herstellung der Schichten Stoffsuspensionen weitere Additive auf, wie insbesondere Retentionsmittel, Entwässerungshilfsmittel, Retentionsmittel-Dual-systeme oder Mikropartikelsysteme, Nass- und Trockenverfestiger, Füllstoffe und/oder Pigmente, insbesondere aus einer Gruppe von Kaolin, Talkum, Calciumcarbonat, Calziumsilikat, Titandioxid, Aluminiumhydroxid, Kieselsäure, Bentonit, Bariumsulfat, ausgewählt, Bindemittelkomponenten, Streichfarbenkomponenten, Entschäumer, Entlüfter, Biozid, Enzyme, Bleichhilfsmittel, optische Aufheller, Farbstoffe, Nuancierfarbstoffen, Störstofffänger, Fällungsmittel, Fixiermittel, Benetzungsmittel, pH-Regulatoren, Kombinationen hiervon aufweist.

In einer weiteren Ausführungsform des erfindungsgemäßen mehrlagigen Verpackungspapiers weist die Streichfarbenzusammensetzung weitere Additive, wie Bindemittel aus einer Gruppe ausgewählt, welche insbesondere natürliche Bindemittel, wie Stärke, Carboxymethylcellulose, Casein, Guar, Sojaproteine, Celluloseether, pflanzliche Proteine anderen Ursprungs, synthetische Bindemittel in Dispersionsform sowie wasserlösbarer Form auf Basis von Styrol-Butadien, Styrol-(Meth) Acrylatestern, Vinylacetetat-Ethylen, Vinylacetat-Acrylatestern, Vinylacetat sowie Polyvinylalkoholen, Kombinationen hieraus, und/oder elektrolytische Bestandteile aus einer Gruppe ausgewählt, welche insbesondere ionogene Bestandteile wie Salze, zum Beispiel Natriumchlorid, Calciumchlorid, Ammoniumsalze, härtebildende Bestandteile im Wasser, Kombinationen hieraus, und/oder Vernetzer, Viskositätsregler, optische Aufheller, Entlüfter, pH-Regulatoren, Kombinationen hieraus auf.

Unter Styrol-Butadien im Sinne der vorliegenden Erfindung werden Styrol-Butadiene vorzugsweise mit einer Glasübergangstemperatur im Bereich 10 - 25° verstanden.

In einer weiteren Ausführungsform des erfindungsgemäßen mehrlagigen Verpackungspapiers sind die Lagen in der Reihenfolge Deckschicht, Schonschicht, Grundschicht zueinander angeordnet und weisen wenigstens auf der Außenseite der Deckschicht einen pigmenthaltigen Strich auf.

Die Aufgabe der vorliegenden Erfindung wird ferner auch durch ein Verfahren zur Herstellung eines mehrlagigen Verpackungspapiers durch Filmpressenpigmentierung eines mehrlagigen Rohpapiers in einer Papiermaschine gelöst. Dabei weist das Verfahren u.a. die folgenden Schritte auf:
➢ Bereitstellen einer Grundschicht mit einer ersten Stoffmischung mit Faserstoffen der Gruppe 1 und 4 nach CEN European Standard EN 643:2001.
➢ Bereitstellen einer Deckschicht mit einer zweiten Stoffmischung mit Faserstoffen der Gruppe 2 und 3 nach CEN European Standard EN 643:2001.
➢ Bereitstellen einer Streichfarbenzusammensetzung mit einem Feststoffgehalt von 30 bis 70 % und einem synthetischen Bindemittelanteil von 5 bis 30 % bezogen auf einen Pigmentanteil.
➢ Herstellung des mehrlagigen Rohpapiers aus wenigstens einer Grundschicht und einer Deckschicht durch Vergautschung der einzelnen Schichten, aufweisend einen spezifischen Berstdruck nach ISO 2759 von 1,85 bis 2,40 kPa * m² / g, einen spezifischen SCTquer (Index) nach ISO 9895 von 12 bis 18 kNm / kg, einen Scott-Bond nach Tappi 569 von 160 bis 320 J/m² des mehrlagigen Rohpapiers und einer D65-Brightness nach ISO 2470-2 von 68 bis 85 % auf der Deckschicht.
➢ Filmpressenpigmentierung des mehrlagigen Rohpapiers zur Erzeugung einer Luftdurchlässigkeit gemäß ISO 5636 von 50 bis 150 ml/min und einer Rauhigkeit nach Bendtsen gemäß ISO 8791-2 von 150 bis 500 ml/min und einer D65-Brightness nach ISO 2470-2 von 68 bis 85 %.

Ferner kann das zuvor beschriebene erfindungsgemäße Verfahren auch folgenden zusätzlichen Schritt beinhalten:
> Bereitstellung wenigstens eine Schonschicht mit einer dritten Stoffmischung mit Faserstoffen der Gruppe 2 und 3 nach CEN European Standard EN 643:2001 zur Abdeckung der Grundschicht.

In einer weiteren Ausführungsform des erfindungsgemäßen Verfahrens weisen die Schichten einen Feuchtegehalt von 10 bis 24 % bei der Vergautschung auf. Mit dieser Ausführungsform kann Einfluss auf die Feuchtegehalte bei der Vergautschung der Schichten bzw. Lagen genommen werden. Der Feuchtegehalt bei der Vergautschung hat Einfluss auf die Bindungsfestigkeiten zwischen den Schichten. Somit lässt sich Einfluss auf die Festigkeit zwischen den Schichten in z-Richtung nehmen. Hierdurch lassen sich innere Festigkeiten, wie beispielsweise die Spaltfestigkeit, beeinflussen und Festigkeitsprobleme, wie beispielsweise Lagentrennung in Weiterverarbeitungsprozessen, vermindern.

In einer weiteren Ausführungsform des erfindungsgemäßen Verfahrens weist die Vergautschung eine Zugabe eines Verfestigers, insbesondere von synthetischen Polymeren Copolymeren auf Basis von Arcylamid und Carbonsäuren und/oder Stärke auf. Mit dieser Ausführungsform kann durch Additivzugabe Einfluss auf die Festigkeitseigenschaften zwischen den einzelnen Schichten bzw. Lagen, d.h. in z-Richtung genommen werden. Hierdurch können Festigkeitsprobleme wie beispielsweise Lagentrennung in Weiterverarbeitungsprozessen gelöst werden.

In einer weiteren Ausführungsform des erfindungsgemäßen Verfahrens weist die Streichfarbenzusammensetzung eine Viskosität nach Brookfield gemessen mit Spindel Nr. 3 bis 4 bei einer Temperatur von 20 bis 30 °C von 100 bis 1500 mPas auf.

Ferner kann das zuvor beschriebene erfindungsgemäße Verfahren auch folgenden zusätzlichen Schritt beinhalten:
> Glättung des mehrlagigen Verpackungspapiers, insbesondere durch einen Softnip-Kalander.

Die vorliegende Erfindung umfasst auch ein erfindungsgemäßes mehrlagiges Verpackungspapier, welches entsprechend dem erfindungsgemäßen Verfahren hergestellt wurde.

Die vorliegende Erfindung umfasst ferner auch die Verwendung des mehrlagigen Verpackungspapiers als Druckträger, insbesondere im Flexo-Preprint und -Postprint, für den Offset-, Tief-, Flexo-, Laser-, Sieb- Inkjet- und Hochdruck, als Testliner, als White Top Liner, als Wellpappenrohpapier und/oder zur Herstellung von Wellpappe und Verpackungen aus Wellpappe, insbesondere unter Verwendung als Außen- und Innendecke von Wellpappe und Verpackungen aus Wellpappe, Kombinationen hiervon.

Ein Vorteil des erfindungsgemäßen mehrlagigen Verpackungspapiers ist, dass die Filmpressenpigmentierung u.a. Einsparungen in den Rohstoffen für die Deckschicht ermöglicht und hierdurch Rohstoff- und Produktionskosten eingespart werden können.

Weitere einzelne oder kombinierte Vorteile des erfindungsgemäßen mehrlagigen Verpackungspapiers gegenüber dem Stand der Technik können beispielsweise beim Be- und Verdrucken wie anhand nachfolgender Ausführungsbeispiele dargestellt u.a. sein:
- Eine geringe Neigung zu langsamen Farbtrocknungsverhalten im Druckprozess, insbesondere im Flexo-Postprint-Verfahren. Hierdurch können auf Flexo-Inlinern Druckgeschwindigkeiten von bis zu 20.000 Bogen/h erreicht werden.
- Ein geringer Farbabrieb und/oder Schmieren im Bereich der Rillkörper. Hierdurch können Reinigungsstillstände reduziert werden.
- Ein Farbannahmeverhalten (kein Trapping) des erfindungsgemäßen mehrlagigen Verpackungspapiers, welches vergleichbar mit dem ungestrichener Liner ist.
- Eine gleichmäßige Farbverteilung auf dem erfindungsgemäßen mehrlagigen Verpackungspapier, besonders im Flächendruck.
- Eine geringe Neigung zu Quetschrändern beispielsweise an den Positionen der Druckelementkanten (Klischeekanten), sichtbar auf dem erfindungsgemäßen mehrlagigen Verpackungspapier.
- Verringerte Neigung zu Dampfblasenbildung, hervorgerufen durch eine zu geschlossenen Oberfläche bei der Weiterverarbeitung beispielsweise in Wellpappenanlagen.
- Keine höhere Kratzempfindlichkeit, hervorgerufen durch die Pigmentierung des Rohpapiers im Vergleich zu unpigmentierten Linern.
- Keine Verschlechterung der Verklebungseigenschaften beispielsweise hinsichtlich des Eindringens und Abbindens von Leimen des erfindungsgemäßen mehrlagigen Verpackungspapiers bei der Weiterverarbeitung.
- Eine Steigerung der Volltondichte im Druck. Hierdurch wird der Einsatz kostengünstiger Druckfarben beispielsweise mit höheren Verschnitt- und geringeren Pigmentanteilen ermöglicht.
- Erzielung eines Glanzeffekts beim Bedrucken des erfindungsgemäßen mehrlagigen Verpackungspapiers beim Einsatz von Glanzlacken im Druckprozess.
- Erzielung wenigstens der vergleichbarer Eigenschaften eines konventionell hergestellten Liners.

Die Erfindung wird nachfolgend anhand bevorzugter Ausführungsbeispiele erläutert. Darüber hinaus stellen diese bevorzugten Ausführungsbeispiele keine Beschränkungen der Erfindung in der Art dar, dass Abwandlungen und Ergänzungen im Umfang der vorliegenden Erfindung liegen.

Die Herstellung des erfindungsgemäßen Rohpapiers im Flächengewichtsbereich von 100 bis 200 g/m², vorzugsweise im Bereich zwischen 110 bis 180 g/m2, ganz bevorzugt 120 bis 150 g/m² auf.

Die Grundschicht weist einen Flächengewichtsbereich von 50 bis 180 g/m², vorzugsweise von 60 bis 160 g/m² auf bei Verwendung einer Stoffmischung mit Faserstoffen der Gruppe 1 und 4 nach CEN European Standard EN 643:2001.

Bei Einsatz einer Schonschicht weist diese einen Flächengewichtsbereich von 10 bis 30 g/m², vorzugsweise von 15 bis 25 g/m² auf bei Verwendung einer Stoffmischung mit Faserstoffen der Gruppe 2 und 3 nach CEN European Standard EN 643:2001.

Die Deckschicht weist einen Flächengewichtsbereich von 10 bis 25 g/m², vorzugsweise von 15 bis 23 g/m² auf bei Verwendung einer Stoffmischung mit Faserstoffen der Gruppe 2 und 3 nach CEN European Standard EN 643:2001. Die Deckschicht weist zudem eine Füllstoffzugabe insbesondere von gefällte Calciumcarbonate mit einer skalenoedrischen Kristallmodifikation und einer Partikelgrößenverteilung bei größer 90% der Partikel im Bereich von 0,1 bis 5 µm und/oder gemahlene Calciumcarbonate mit einer Partikelgrößenverteilung der Partikel im Bereich von 50 bis 90 % kleiner 2 µm auf. Zudem weist die Deckschicht eine Zugabe von deinktem Altpapierstoff oder CTMP auf.

Bei der Herstellung des Rohpapiers auf einer Papiermaschine können weitere Additive, wie insbesondere Retentionsmittel, Entwässerungshilfsmittel, Retentionsmittel-Dual-systeme oder Mikropartikelsysteme, Nass- und Trockenverfestiger, Füllstoffe und/oder Pigmente, insbesondere aus einer Gruppe von Kaolin, Talkum, Calciumcarbonat, Calziumsilikat, Titandioxid, Aluminiumhydroxid, Kieselsäure, Bentonit, Bariumsulfat, ausgewählt, Bindemittelkomponenten, Streichfarbenkomponenten, Entschäumer, Entlüfter, Biozid, Enzyme, Bleichhilfsmittel, optische Aufheller, Farbstoffe, Nuancierfarbstoffen, Störstofffänger, Fällungsmittel, Fixiermittel, Benetzungsmittel, pH-Regulatoren, Kombinationen hiervon zum Einsatz kommen.

Mit einer Filmpresse kann auf die Deckschicht ein Strichgewicht im Bereich von 3 bis 10 g/m², vorzugsweise im Bereich zwischen 3 und 8 g/m², ganz bevorzugt 4 bis 5 g/m² auf aufgetragen. Die verwendete Streichfarben weisen einen Feststoffgehalt im Bereich von 30 bis 70 %, vorzugsweise im Bereich zwischen 55 bis 65 %, ganz bevorzugt zwischen 57 bis 63 % auf. Die verwendete Streichfarben weisen einen pH-Wert im Bereich von 7,5 bis 9,5, vorzugsweise im Bereich zwischen 7,8 bis 9,2, ganz bevorzugt zwischen 8 bis 9 auf.

Die Fahrweisen auf der Filmpresse erfolgten jeweils mit und ohne Auftrag eines Verfestigers, insbesondere von Stärke auf die Grundschicht.

Das Strichgewicht des Stärkeauftrags erfolgte im Bereich von 1 bis 3 g/m², vorzugsweise im Bereich zwischen 1,5 bis 2,5 g/m², ganz bevorzugt im Bereich von 1,6 bis 2,0 g/m². Die aufgetragene Stärkelösung wies einen Feststoffgehalt im Bereich von 2 bis 25 %, vorzugsweise im Bereich von 5 bis 20 %, ganz bevorzugt im Bereich von 10 bis 15 % auf bei Viskositäten nach Brookfiled gemessen mit Spindel - 1 bei 100 upm im Bereich bis 100 m Pas, vorzugsweise im Bereich zwischen 10 bis 30 mPas, ganz bevorzugt im Bereich von 15 bis 25 mPas.

Die Papierbahn wies vor dem Einlauf in die Filmpresse einen Trockengehalt im Bereich von 84 bis 97 %, vorzugsweise im Bereich zwischen 85 bis 95 %, ganz bevorzugt zwischen 88 bis 92 % auf.

Die Bezüge der Filmpressenwalzen wiesen Härten im Bereich von 20 bis 80 P&J, vorzugsweise im Bereich von 30 bis 60 P&J, ganz bevorzugt im Bereich von 40 bis 50 P&J auf.

Die Linienlast der Filmpresse wies im Betrieb im Bereich zwischen 5 bis 120 kN/m, vorzugsweise 10 bis 110 kN/m, ganz bevorzugt im Bereich von 30 bis 80 kN/m auf.

Die Auftragsrakel wiesen Durchmesser im Bereich zwischen 5 bis 60 mm, vorzugsweise 10 bis 50 mm, ganz bevorzugt im Bereich von 15 bis 38 mm auf.

In den folgenden Tabellen 1 bis 3 sind die Parameter der Strichrezepturen dargestellt. Die Bezeichnung F steht für Streichfarbenrezeptur wobei F1 die Standardrezeptur ist und F 2 bis F 18 alternative Streichfarbenrezepturen sind.

**Tabelle 1: Strichrezepturen F1 bis F7.**

| | F1 | F2 | F3 | F4 | F5 | F6 | F7 |
|---|---|---|---|---|---|---|---|
| | Standard | Binder reduzieren | Feststoffgehalt erhöhten | Wasserretention verbessern | Pigmentvariation | Pigmentvariation | Pigmentvariation |
| | | | | | | | |
| **Pigment** | | | | | | | |
| Carbonat 1 | 50 | 50 | 50 | 50 | 70 | | |
| Kaolin 1 | 50 | 50 | 50 | 50 | 30 | | |
| Carbonat 2 | | | | | | | 100 |
| Carbonat 3 (gröber) | | | | | | 100 | |
| Carbonat 4 | | | | | | | |
| Carbonat 5 | | | | | | | |
| Mischung: Carbonat/Kaolin | | | | | | | |
| Titandioxid | | | | | | | |
| Silikat | | | | | | | |
| Calciumsilikat | | | | | | | |
| **Binder** | | | | | | | |
| Binder 1 | 14 | 10 | 10 | 10 | 10 | 10 | 10 |
| Binder 2 | | | | | | | |
| **Additive** | | | | | | | |
| PVA | 0,5 | 0,5 | 0,25 | 0,7 | 0,5 | 0,5 | 0,5 |
| Vernetzer | | | | | | | |
| Verdicker | 0,25 | 0,25 | 0,25 | 0,25 | 0,25 | 0,25 | 0,25 |
| Optischer Aufheller | 0,5 | 0,5 | 0,5 | 0,5 | 0,5 | 0,5 | 0,5 |
| **Viskosität** | 300-400 | 300-400 | 300-400 | 300-400 | 300-400 | 300-400 | 300-400 |
| **pH** | | | | | | | |
| **Feststoffgehalt %** | 57 | 57 | 60 | 57 | 57 | 57 | 57 |

**Tabelle 2: Strichrezepturen F8 bis F13.**

| | F8 | F9 | F10 | F 11 | F12 | F13 |
|---|---|---|---|---|---|---|
| | Pigmentvariation | Pigmentvariation | Pigmentvariation | Pigmentvariation | Pigmentvariation | Pigmentvariation |
| | | | | | | |
| **Pigment** | | | | | | |
| Carbonat 1 | 50 | | | | | |
| Kaolin 1 | | 30 | 30 | | | |
| Carbonat 2 | | | 70 | | | |
| Carbonat 3 (gröber) | 50 | 70 | | | 50 | 80 |
| Carbonat 4 | | | | 100 | | |
| Carbonat 5 | | | | | | |
| Mischung: Carbonat/Kaolin | | | | | | |
| Titandioxid | | | | | 50 | 20 |
| Silikat | | | | | | |
| Calciumsilikat | | | | | | |
| **Binder** | | | | | | |
| Binder 1 | 10 | 10 | 10 | 10 | 10 | 10 |
| Binder 2 | | | | | | |
| **Additive** | | | | | | |
| PVA | 0,5 | 0,5 | 0,5 | 0,5 | 0,5 | 0,5 |
| Vernetzer | | | | | | |
| Verdicker | 0,25 | 0,25 | 0,25 | 0,25 | 0,25 | 0,25 |
| Optischer Aufheller | 0,5 | 0,5 | 0,5 | 0,5 | 0,5 | 0,5 |
| **Viskosität** | 300-400 | 300-400 | 300-400 | 300-400 | 300-400 | 300-400 |
| **pH** | | | | | | |
| **Feststoffgehalt %** | 57 | 57 | 57 | 57 | 57 | 57 |

**Tabelle 3: Strichrezepturen F14 bis F20.**

| | F14 | F 15 | F16 | F17 | F18 | F19 | F20 |
|---|---|---|---|---|---|---|---|
| | Pigmentvariation | Pigmentvariation | Pigmentvariation | Pigmentvariation | Pigmentvariation | Wasserretention verbessern | Feststoffgeh atterhöhen |
| | | | | | | | |
| **Pigment** | | | | | | | |
| Carbonat 1 | | | | 50 | | 50 | 50 |
| Kaolin 1 | | | | 50 | | 50 | 50 |
| Carbonat 2 | | | | | | | |
| Carbonat 3 (gröber) | 80 | 80 | | | | | |
| Carbonat 4 | | | | | | | |
| Carbonat 5 | | | | | 100 | | |
| Mischung: Carbonat/Kaolin | | | 100 | | | | |
| Titandioxid | | | | | | | |
| Silikat | 20 | | | | | | |
| Calciumsilikat | | 20 | | | | | |
| **Binder** | | | | | | | |
| Binder 1 | 10 | 10 | 10 | | 10 | 10 | 10 |
| Binder 2 | | | | 15 | | | |
| **Additive** | | | | | | | |
| PVA | 0,5 | 0,5 | 0,5 | 0,5 | 0,5 | 0,25 | 0,7 |
| Vernetzer | | | | | | | |
| Verdicker | 0,25 | 0,25 | 0,25 | 0,25 | 0,25 | 0,25 | 0,25 |
| Optischer Aufheller | 0,5 | 0,5 | 0,5 | 0,5 | 0,5 | 0,5 | 0,5 |
| **Viskosität** | 300-400 | 300-400 | 300-400 | 500 | 300-400 | 300-400 | 300-400 |
| **pH** | | | | | | | |
| **Feststoffgehalt %** | 57 | 57 | 57 | 57 | 57 | 57 | 60 |

Die Nachbehandlung des pigmentierten Verpackungspapiers erfolgte in einem Softnipkalander mittels Stahl- und Polymerwalze bei einer Linienlast im Bereich von 10 bis 150 kN/m, vorzugsweise im Bereich zwischen 15 bis 130 kN/m, ganz bevorzugt 35 bis 120 kN/m bei Temperaturen im Bereich von 40 bis 160 °C, vorzugsweise im Bereich zwischen 50 bis 150 °C, ganz bevorzugt zwischen 60 bis 100 °C.

Das Verpackungspapier weist nach der Nachbehandlung mit dem Softnipkalander Luftdurchlässigkeitswerte nach Bendtsen gemäß ISO 5636-3 im Bereich von 50 bis 150 ml/min, vorzugsweise im Bereich zwischen 70 und 130 ml/min, ganz bevorzugt 80 bis 100 ml/min, eine Rauheit nach Bendtsen gemäß ISO 8791-2 im Bereich von 110 bis 490 ml/min, vorzugsweise im Bereich zwischen 130 und 470 ml/min, ganz bevorzugt 150 bis 450 ml/min und eine Weiße nach D65-Brightness gemäß ISO 2470-2 im Bereich von 68 bis 85 %, vorzugsweise im Bereich zwischen 70 und 83 %, ganz bevorzugt 72 bis 83 % auf.

Die Druck- und Verarbeitungseigenschaften des pigmentierten Verpackungspapiers gleichen einem ungestrichenen bzw. nicht pigmentierten Liners und können wie folgt beschrieben werden.
1. Beschreibung der Druckeigenschaften:
   - Erreichen von Druckgeschwindigkeiten auf Flexo-Inlinern von bis zu 20.000 Bogen/h
   - Keine Neigung zu schlechteren (langsameren) Farbtrocknungsverhalten im Druckprozess
   - Kein Farbabrieb und/oder Schmieren im Bereich der Rillkörper
   - Farbannahmeverhalten (kein Trapping)
   - Gleichmäßige Farbverteilung, besonders im Flächendruck
   - Keine stärkere Neigung zu Quetschrändern an den Druckelementkanten (Klischeekanten)
2. Beschreibung der Verarbeitungseigenschaften:
   - Verarbeitungseigenschaften auf Wellpappenanlagen:
      ∘ Keine Neigung zu Dampfblasenbildung durch geschlossene Oberfläche
      ∘ Keine höhere Kratzempfindlichkeit durch Pigmentierung
   - Verarbeitungseigenschaften auf üblichen Verarbeitungsmaschinen in der Wellpappenindustrie:
      ∘ Keine schlechteren Verklebungseigenschaften (Eindringen und Abbinden aller üblichen Leime)

Die unter 1. und 2. beschriebenen Druck- und Verarbeitungseigenschaften werden sichergestellt durch:
- Auswahl des Strichrezeptes
- Art der Strichaufbereitung
- Festlegung des Strichgewichtes (g/m²)
- Art des Strichauftrages

In den folgenden Tabellen 4 und 5 sind die Ergebnisse aus den Druckversuchen

| **Druck mit niedriger Farbübertragung** | | | | |
|---|---|---|---|---|
| **Messung** | **Standard** | **FP3** | **FP 6** | **FP 10** |
| Vollton-Dichte Cyan | 0.82 | 0.97 | 0.97 | 0.97 |
| Druckzuwachs bei 80% | 4% | 5% | 4% | 5% |
| Druckzuwachs bei 40% | 8% | 12% | 6% | 10% |
| Vollton-Dichte Magenta | 0.94 | 1.10 | 1.15 | 1.15 |
| Druckzuwachs bei 80% | 5% | 4% | 3% | 3% |
| Druckzuwachs bei 40% | 9% | 10% | 6% | 8% |
| Vollton-Dichte Yellow | 0.95 | 1.18 | 1.10 | 1.22 |
| Druckzuwachs bei 80% | 4% | 5% | 7% | 3% |

dargestellt. Die Bezeichnung FP steht für Filmpressenpigmentierung und die Ziffer danach für das aufgetragene Strichgewicht in g/m².

**Tabelle 4: Druck mit niedriger Farbübertragung.**

| | | | | |
|---|---|---|---|---|
| Druckzuwachs bei 40% | 10% | 10% | 12% | 10% |
| Vollton-Dichte Black | 1.32 | 1.52 | 1.49 | 1.49 |
| Druckzuwachs bei 80% | 3% | 6% | 4% | 3% |
| Druckzuwachs bei 40% | 8% | 10% | 7% | 6% |

**Tabelle 5: Druck mit hoher Farbübertragung.**

| **Druck mit hoher Farbübertragung** | | | | |
|---|---|---|---|---|
| **Messung** | **Standard** | **FP 3** | **FP 6** | **FP 10** |
| Vollton-Dichte Cyan | 1.12 | 1.14 | 1.21 | 1.28 |
| Druckzuwachs bei 80% | 4% | 8% | 8% | 10% |
| Druckzuwachs bei 40% | 13% | 15% | 13% | 19% |
| Vollton-Dichte Magenta | 1.29 | 1.32 | 1.46 | 1.59 |
| Druckzuwachs bei 80% | 11% | 11% | 12% | 15% |
| Druckzuwachs bei 40% | 18% | 19% | 19% | 20% |
| Vollton-Dichte Yellow | 1.59 | 1.57 | 1.69 | 1.77 |
| Druckzuwachs bei 80% | 10% | 11% | 15% | 16% |
| Druckzuwachs bei 40% | 19% | 21% | 26% | 28% |
| Vollton-Dichte Black | 1.64 | 1.71 | 1.71 | 1.88 |
| Druckzuwachs bei 80% | 6% | 7% | 8% | 10% |
| Druckzuwachs bei 40% | 11% | 11% | 13% | 13% |

Die Vorteile pigmentierter Liner gegenüber unpigmentierten Linern sind nachfolgend aufgeführt, wobei die entsprechenden Produkte nicht zwingend alle nachstehenden Vorteile aufweisen müssen (s. auch Tab. 4 und 5):
- Steigerung der Volltondichte im Druck. Dadurch wird der Einsatz von Druckfarben mit höheren Verschnittanteilen und niedrigeren Pigmentanteilen und damit Kosteneinsparung möglich.
- In den Druckversuchen konnte ermittelt werden, dass der Tonwertzuwachs bei 40% und 80% Tonwert bei niedriger Farbübertragung (s. auch Tab. 4) von ca. 7 cm³/m² bei gleichzeitiger Volltondichtesteigerung durch die Pigmentierung nicht ansteigt.
- Bei höherer Farbübertragung (s. auch Tab. 5) von ca. 11 bis 15 cm³/m² zeigte der Versuch, dass Volltondichte und Tonwertzuwachs mit steigendem Pigmentauftrag ebenfalls steigen. Bei Reduzierung des Farbpigmentanteils in der Druckfarbe ist eine Reduzierung des Tonwertzuwachses zu erwarten.
- Bei Einsatz von Glanzlacken im Druckprozess kann auf pigmentierten Linern ein Glanzeffekt erreicht werden. Das Potential muss in weiteren Versuchen ermittelt werden.

Die Qualitätsgrößen der pigmentierten Verpackungspapiere jeweils mit dem aufgetragenen Strichgewicht im Vergleich zu einem nicht pigmentierten Liner ist in Tabelle 6 beispielhaft dargestellt.

**Tabelle 6: Qualitätsgrößen des pigmentierten Verpackungspapiers im Vergleich zu einem nicht pigmentierten Liner.**

| **Musterbezeichnung** | **Standard** | **+ 10 g/m² Strich** | **+ 6 g/m² Strich** | **+ 3 g/m² Strich** |
|---|---|---|---|---|
| Bearbeitungsschritt | kalandriert | kalandriert | kalandriert | kalandriert |
| Weißgrad D65 [%] | 71,4 | 73,4 | 71,5 | 69,3 |
| Weißgrad ISO [%] | 67,7 | 70,1 | 68,2 | 65,6 |
| Farbwert L* C/2 | 85,1 | 86,91 | 85,94 | 84,64 |
| Farbwert a* C/2 | 1,05 | 0,49 | 0,64 | 0,89 |
| Farbwert b* C/2 | - 1,35 | -0,27 | -0,32 | -0,35 |
| Flächengewicht [g/m²] | 140 | 140,7 | 140,1 | 132,6 |
| Dicke [µm] | 187 | 187 | 182 | 183 |
| Rauheit Bendtsen [ml/min] | 353 | 347 | 333 | 359 |
| Luftdurchlässigkeit [ml/min] | 150 | 79,7 | 94,1 | 145 |
| Cobb 60 [g/m²] | 33,4 | 147 (durch) | 150 (durch) | 147 (durch) |
| SCTquer [kN/m] | 2,01 | 2,56 | 2,39 | 2,43 |
| Berstdruck [KPa] | 300 | 328 | 324 | 320 |
| Dennison | 14,3 | 12 | 13 | 13 |
| Scott-Bond [J/m²] | 219 | 239 | 243 | 243 |
| T95 [sek] | 0,4 | 0,24 | 0,14 | 0,10 |

Zur Charakterisierung des Penetrationsverhaltens von Flüssigkeiten beim Auftreffen auf die Papieroberfläche und Simulation von Eigenschaften im Druckprozess, wie beispielsweise das Aufbringen von Druckfarben auf Papier oder das Eindringen von Wasser in das Papier wurde die Penetrationsmessmethode T95 mit dem Gerät EST 12 des Unternehmens emtec Electronic GmbH verwendet.

Das Prinzip der Messmethode kann wie folgt beschrieben werden:
Die zu prüfende Papieroberfläche wird in die Prüfflüssigkeit zwischen Ultraschallgeber und Ultraschallsensor gebracht, das Papier ist dabei mit der (nicht zu prüfenden) Rückseite mittels eines doppelseitigen Klebebandes auf einer Trägerplatte befestigt. Der Ultraschallsensor ermittelt einen Kurvenverlauf des Ultraschallsignals (Anstieg und Abfall) über den Zeitverlauf. Der hierbei ermittelte T95-Wert erklärt sich folgendermaßen. T steht für Zeit, 95 steht für 95 % des Ultraschallmaximalsignals. Dieses fällt nach Eintauchen des Papiers in die Testflüssigkeit bedingt durch und abhängig vom Eindringen der Flüssigkeit in die Papieroberfläche und der damit einsetzenden Luftverdrängung zeitlich ab. Der T95-Wert stellt somit die Zeit dar, nach der das Ultraschallsignal auf 95 % seines Maximums gesunken ist.

Wie in Tab. 6 dargestellt, wurden drei filmpressenpigmentierte Liner u.a. mit der T95-Methode gemessen. Es konnte eine deutliche Differenzierung zwischen den drei verschiedenen Auftragsgewichten ermittelt werden. Ein Vergleich zum Standard ist nur bedingt möglich, da dieser zusätzlich mit einer Oberflächenleimung ausgestattet war.

## Patentansprüche

1. Mehrlagiges Verpackungspapier, insbesondere Testliner, für die Wellpappenherstellung mit einer flächenbezogenen Masse nach DIN EN ISO 536 von 100 bis 200 g/m² mit einem Rohpapier, welches:
- eine Grundschicht mit einer ersten Stoffmischung mit Faserstoffen ausgewählt aus der Gruppe 1 gemäß der Europäischen Liste der Standardsorten für Altpapier und Pappe nach CEN European Standard EN 643:2001, nämlich unsortiertes gemischtes Altpapier, sortiertes gemischtes Altpapier, Graukarton, Kaufhausaltpapier, alte Wellpappe Verpackungen, unverkaufte Illustrierte, unverkaufte Illustrierte ohne Kleberücken, Telefonbücher, Zeitungen und Illustrierte gemischt, Deinkingware und Kombinationen hiervon und
aus der Gruppe 4 gemäß der Europäischen Liste der Standardsorten für Altpapier und Pappe nach CEN European Standard EN 643:2001, insbesondere neue Späne aus Wellpappe, nämlich unbenutzte Kraftwellpappe, unbenutzte Wellpappe, gebrauchte Kraftwellpappe, gebrauchte Kraftpapiersäcke, gebrauchte Kraftpapiersäcke mit kunststoffbeschichteten Papieren, unbenutzte Kraftpapiersäcke, unbenutzte Kraftpapiersäcke mit kunststoffbeschichteten Papieren, gebrauchtes Kraftpapier, unbenutztes Kraftpapier, unbenutzter Krafttragekarton und Kombinationen hiervon und
die Grundschicht einen Flächengewichtsbereich vorzugsweise im Bereich zwischen 50 bis 180 g/m² aufweist;
- eine Deckschicht mit einer zweiten Stoffmischung mit Faserstoffen ausgewählt aus der Gruppe 2 gemäß der Europäischen Liste der Standardsorten für Altpapier und Pappe nach CEN European Standard EN 643:2001, nämlich Zeitungen, unverkaufte Zeitungen, unverkaufte Zeitungen mit Flexodruck unzulässig, weiße Späne mit leichtem Andruck, weiße Späne mit leichtem Andruck ohne Kleberücken, weiße Späne stark bedruckt, weiße Späne stark bedruckt ohne Kleberücken, Büroaltpapier sortiert, bunte Akten, weiße Bücher holzfrei, bunte Illustrierte holzfrei, Selbstdurchschreib-Papiere, PE-beschichteter Karton gebleicht holzfrei, anderer PE-beschichteter Karton, Endlosformulare holzhaltig und Kombinationen hiervon und
aus der Gruppe 3 gemäß der Europäischen Liste der Standardsorten für Altpapier und Pappe nach CEN European Standard EN 643:2001, nämlich gemischte hellbunte Druckspäne, gemischte hellbunte Druckspäne holzfrei, Buchbinderspäne holzfrei, weiße Späne mit leichtem Andruck holzfrei, weiße Akten holzfrei, weiße Geschäftsformulare, weiße Endlosformulare holzfrei, gebleichter Sulfatkarton bedruckt, gebleichter Sulfatkarton mit leichtem Andruck, Multidruck, weißer mehrlagiger Karton stark bedruckt, weißer mehrlagiger Karton mit leichtem Andruck, weißer mehrlagiger Karton unbedruckt, weißes Zeitungsdruckpapier, weißes gestrichenes und ungestrichenes Papier holzhaltig, weißes gestrichenes Papier holzhaltig, weißes gestrichenes Papier holzfrei ohne Kleberücken, weiße Späne, weiße Späne holzfrei, weiße ungestrichene Späne holzfrei, gebleichter Sulfat-Karton unbedruckt und Kombinationen hiervon
und Füllstoff und deinktem Altpapierstoff oder CTMP aufweist;
zur Erzeugung eines Rohpapiers mit einem Flächengewichtsbereich von 100 bis 200 g/m² und einem spezifischen Berstdruck nach ISO 2759 von 1,85 bis 2,40 kPa * m²/g und einem spezifischen SCT_{quer} nach ISO 9895 von 12 bis 18 kNm / kg und einem Scott-Bond nach Tappi 569 von 160 bis 320 J/m² und einer D65-Brightness nach ISO 2470-2 von 68 bis 85 % auf der Deckschichtoberseite;
**dadurch gekennzeichnet, dass**
das Rohpapier wenigstens auf der Oberseite der Deckschicht eine Filmpressenpigmentierung mit einem Strichgewicht von 3 bis 10 g/m², bei einer ersten Streichfarbenzusammensetzung mit einem Feststoffgehalt von 30 bis 70 % und einem synthetischen Bindemittelanteil von 5 bis 30 % bezogen auf einen Pigmentanteil, zur Erzeugung des mehrlagigen Verpackungspapiers mit einer Luftdurchlässigkeit nach Bendtsen gemäß ISO 5636-3 von 50 bis 150 ml/min, einer Rauhigkeit nach Bendtsen gemäß ISO 8791-2 von 150 bis 500 ml/min und einer D65-Brightness nach ISO 2470-2 von 68 bis 85 %.

2. Mehrlagiges Verpackungspapier gemäß Anspruch 1 **dadurch gekennzeichnet, dass** das Rohpapier eine Schonschicht mit einer dritten Stoffmischung mit wenigstens Faserstoffen ausgewählt aus der Gruppe 2 gemäß der Europäischen Liste der Standardsorten für Altpapier und Pappe nach CEN European Standard EN 643:2001, nämlich Zeitungen, unverkaufte Zeitungen, unverkaufte Zeitungen mit Flexodruck unzulässig, weiße Späne mit leichtem Andruck, weiße Späne mit leichtem Andruck ohne Kleberücken, weiße Späne stark bedruckt, weiße Späne stark bedruckt ohne Kleberücken, Büroaltpapier sortiert, bunte Akten, weiße Bücher holzfrei, bunte Illustrierte holzfrei, Selbstdurchschreib-Papiere, PE-beschichteter Karton gebleicht holzfrei, anderer PE-beschichteter Karton, Endlosformulare holzhaltig und Kombinationen hiervon und
aus der Gruppe 3 gemäß der Europäischen Liste der Standardsorten für Altpapier und Pappe nach CEN European Standard EN 643:2001, nämlich gemischte hellbunte Druckspäne, gemischte hellbunte Druckspäne holzfrei, Buchbinderspäne holzfrei, weiße Späne mit leichtem Andruck holzfrei, weiße Akten holzfrei, weiße Geschäftsformulare, weiße Endlosformulare holzfrei, gebleichter Sulfatkarton bedruckt, gebleichter Sulfatkarton mit leichtem Andruck, Multidruck, weißer mehrlagiger Karton stark bedruckt, weißer mehrlagiger Karton mit leichtem Andruck, weißer mehrlagiger Karton unbedruckt, weißes Zeitungsdruckpapier, weißes gestrichenes und ungestrichenes Papier holzhaltig, weißes gestrichenes Papier holzhaltig, weißes gestrichenes Papier holzfrei ohne Kleberücken, weiße Späne, weiße Späne holzfrei, weiße ungestrichene Späne holzfrei, gebleichter Sulfat-Karton unbedruckt und Kombinationen hiervon
und die Schonschicht einen Flächengewichtsbereich von 10 bis 30 g/m² aufweist.

3. Mehrlagiges Verpackungspapier gemäß einem der Ansprüche 1 oder 2 **dadurch gekennzeichnet, dass** der Füllstoff aus einer Gruppe von Materialien ausgewählt ist, welche Mineralien wie insbesondere Kaoline, Talkum, Calciumcarbonate, insbesondere gefälltes Calziumcarbonat mit einer skalenoedrischen Kristallmodifikation und einer Partikelgrößenverteilung bei größer 90% der Partikel im Bereich von 0,1 bis 5 µm und/oder gemahlenes Calciumcarbonat mit einer Partikelgrößenverteilung der Partikel im Bereich 50 bis 90 % kleiner 2 µm, Calziumsilikate, Titandioxid, Aluminiumhydroxide, Kieselsäuren, Bentonite, Bariumsulfate, synthetische Füllstoffe bzw. Kunststoffteilchen, Farbstoffe, Kombinationen hieraus aufweist.

4. Mehrlagiges Verpackungspapier gemäß einem der Ansprüche 1 bis 3 **dadurch gekennzeichnet, dass** die erste Streichfarbenzusammensetzung einen Feststoffgehalt von 30 bis 70 %, bevorzugt von 55 bis 65 % und besonders bevorzugt von 57 bis 63 % aufweist.

5. Mehrlagiges Verpackungspapier gemäß einem der Ansprüche 1 bis 4 **dadurch gekennzeichnet, dass** die erste Streichfarbenzusammensetzung einen synthetische Bindemittelanteil von 8 bis 15 %, bevorzugt von 9 bis 13 % und besonders bevorzugt von 10 bis 11 % bezogen auf einen Pigmentanteil aufweist.

6. Mehrlagiges Verpackungspapier gemäß einem der Ansprüche 1 bis 5 **dadurch gekennzeichnet, dass** der Pigmentanteil aus einer Gruppe von Materialien ausgewählt ist, welche Mineralien wie insbesondere Kaoline, insbesondere Kaoline mit einem aspect ratio im Bereich von 10 bis 60 mit einer Partikelgrößenverteilung der Partikel im Bereich von 55 bis 80 % kleiner 2 µm, Talkum, Calciumcarbonate, insbesondere Calciumcarbonate mit einer Partikelgrößenverteilung der Partikel im Bereich 50 bis 90 % kleiner 2 µm, Calziumsilikate, Titandioxid, Aluminiumhydroxide, Kieselsäuren, Bentonite, Bariumsulfate, synthetische Füllstoffe bzw. Kunststoffteilchen, Farbstoffe, Kombinationen hieraus aufweist.

7. Mehrlagiges Verpackungspapier gemäß einem der Ansprüche 1 bis 6 **dadurch gekennzeichnet, dass** eine Herstellung der Schichten Stoffsuspensionen aufweist, welche weitere Additive, wie insbesondere Retentionsmittel, Entwässerungshilfsmittel, Retentionsmittel-Dual-systeme oder Mikropartikelsysteme, Nass- und Trockenverfestiger, Füllstoffe und/oder Pigmente, insbesondere aus einer Gruppe von Kaolin, Talkum, Calciumcarbonat, Calziumsilikat, Titandioxid, Aluminiumhydroxid, Kieselsäure, Bentonit, Bariumsulfat, ausgewählt, Bindemittelkomponenten, Streichfarbenkomponenten, Entschäumer, Entlüfter, Biozid, Enzyme, Bleichhilfsmittel, optische Aufheller, Farbstoffe, Nuancierfarbstoffen, Störstofffänger, Fällungsmittel, Fixiermittel, Benetzungsmittel, pH-Regulatoren, Kombinationen hiervon aufweist.

8. Mehrlagiges Verpackungspapier gemäß einem der Ansprüche 1 bis 7 **dadurch gekennzeichnet, dass** die Streichfarbenzusammensetzung weitere Additive, wie Bindemittel aus einer Gruppe ausgewählt, welche insbesondere natürliche Bindemittel, wie Stärke, Carboxymethylcellulose, Casein, Guar, Sojaproteine, Celluloseether, pflanzliche Proteine anderen Ursprungs, synthetische Bindemittel in Dispersionsform sowie wasserlösbarer Form auf Basis von Styrol-Butadien, Styrol-(Meth) Acrylatestern, Vinylacetetat-Ethylen, Vinylacetat-Acrylatestern, Vinylacetat sowie Polyvinylalkoholen, Kombinationen hieraus, und/oder
elektrolytische Bestandteile aus einer Gruppe ausgewählt, welche insbesondere ionogene Bestandteile wie Salze, zum Beispiel Natriumchlorid, Calciumchlorid, Ammoniumsalze, härtebildende Bestandteile im Wasser, Kombinationen hieraus, und/oder
Vernetzer, Viskositätsregler, optische Aufheller, Entlüfter, pH-Regulatoren, Kombinationen hieraus aufweist.

9. Mehrlagiges Verpackungspapier gemäß einem der Ansprüche 2 bis 8 **dadurch gekennzeichnet, dass** die Lagen in der Reihenfolge Deckschicht, Schonschicht, Grundschicht zueinander angeordnet sind und wenigstens auf der Außenseite der Deckschicht einen pigmenthaltigen Strich aufweist.

10. Verfahren zur Herstellung eines mehrlagigen Verpackungspapiers durch Filmpressenpigmentierung eines mehrlagigen Rohpapiers in einer Papiermaschine mit den Schritten:
➢ Bereitstellen einer Grundschicht mit einer ersten Stoffmischung mit Faserstoffen ausgewählt aus der Gruppe 1 gemäß der Europäischen Liste der Standardsorten für Altpapier und Pappe nach CEN European Standard EN 643:2001, nämlich unsortiertes gemischtes Altpapier, sortiertes gemischtes Altpapier, Graukarton, Kaufhausaltpapier, alte Wellpappe Verpackungen, unverkaufte Illustrierte, unverkaufte Illustrierte ohne Kleberücken, Telefonbücher, Zeitungen und Illustrierte gemischt, Deinkingware und Kombinationen hiervon und
aus der Gruppe 4 gemäß der Europäischen Liste der Standardsorten für Altpapier und Pappe nach CEN European Standard EN 643:2001, nämlich neue Späne aus Wellpappe, unbenutzte Kraftwellpappe, unbenutzte Wellpappe, gebrauchte Kraftwellpappe, gebrauchte Kraftpapiersäcke, gebrauchte Kraftpapiersäcke mit kunststoffbeschichteten Papieren, unbenutzte Kraftpapiersäcke, unbenutzte Kraftpapiersäcke mit kunststoffbeschichteten Papieren, gebrauchtes Kraftpapier, unbenutztes Kraftpapier, unbenutzter Krafttragekarton und Kombinationen hiervon und die Grundschicht einen Flächengewichtsbereich vorzugsweise im Bereich zwischen 50 bis 180 g/m² aufweist;
➢ Bereitstellen einer Deckschicht mit einer zweiten Stoffmischung mit Faserstoffen ausgewählt aus der Gruppe 2 gemäß der Europäischen Liste der Standardsorten für Altpapier und Pappe nach CEN European Standard EN 643:2001, nämlich Zeitungen, unverkaufte Zeitungen, unverkaufte Zeitungen mit Flexodruck unzulässig, weiße Späne mit leichtem Andruck, weiße Späne mit leichtem Andruck ohne Kleberücken, weiße Späne stark bedruckt, weiße Späne stark bedruckt ohne Kleberücken, Büroaltpapier sortiert, bunte Akten, weiße Bücher holzfrei, bunte Illustrierte holzfrei, Selbstdurchschreib-Papiere, PE-beschichteter Karton gebleicht holzfrei, anderer PE-beschichteter Karton, Endlosformulare holzhaltig und Kombinationen hiervon und
aus der Gruppe 3 gemäß der Europäischen Liste der Standardsorten für Altpapier und Pappe nach CEN European Standard EN 643:2001, nämlich gemischte hellbunte Druckspäne, gemischte hellbunte Druckspäne holzfrei, Buchbinderspäne holzfrei, weiße Späne mit leichtem Andruck holzfrei, weiße Akten holzfrei, weiße Geschäftsformulare, weiße Endlosformulare holzfrei, gebleichter Sulfatkarton bedruckt, gebleichter Sulfatkarton mit leichtem Andruck, Multidruck, weißer mehrlagiger Karton stark bedruckt, weißer mehrlagiger Karton mit leichtem Andruck, weißer mehrlagiger Karton unbedruckt, weißes Zeitungsdruckpapier, weißes gestrichenes und ungestrichenes Papier holzhaltig, weißes gestrichenes Papier holzhaltig, weißes gestrichenes Papier holzfrei ohne Kleberücken, weiße Späne, weiße Späne holzfrei, weiße ungestrichene Späne holzfrei, gebleichter Sulfat-Karton unbedruckt und Kombinationen hiervon
und Füllstoff und deinktem Altpapierstoff oder CTMP aufweist;
➢ Bereitstellen einer Streichfarbenzusammensetzung mit einem Feststoffgehalt von 30 bis 70 % und einem synthetischen Bindemittelanteil von 5 bis 30 % bezogen auf einen Pigmentanteil;
➢ Herstellung des mehrlagigen Rohpapiers mit einem Flächengewichtsbereich von 100 bis 200 g/m² aus wenigstens einer Grundschicht und einer Deckschicht durch Vergautschung der einzelnen Schichten, aufweisend einen spezifischen Berstdruck nach ISO 2759 von 1,85 bis 2,40 kPa * m² / g, einen spezifischen SCTquer (Index) nach ISO 9895 von 12 bis 18 kNm / kg, einen Scott-Bond nach Tappi 569 von 160 bis 320 J/m² des mehrlagigen Rohpapiers und einer D65-Brightness nach ISO 2470-2 von 68 bis 85 % auf der Deckschicht;
➢ Filmpressenpigmentierung des mehrlagigen Rohpapiers zur Erzeugung einer Luftdurchlässigkeit gemäß ISO 5636 von 50 bis 150 ml/min und einer Rauhigkeit nach Bendtsen gemäß ISO 8791-2 von 150 bis 500 ml/min und einer D65-Brightness nach ISO 2470-2 von 68 bis 85 %.

11. Verfahren gemäß Anspruch 10 **dadurch gekennzeichnet, dass** zur Abdeckung der Grundschicht wenigstens eine Schonschicht bereitgestellt wird mit einer dritten Stoffmischung mit Faserstoffen ausgewählt aus der Gruppe 2 gemäß der Europäischen Liste der Standardsorten für Altpapier und Pappe nach CEN European Standard EN 643:2001, nämlich Zeitungen, unverkaufte Zeitungen, unverkaufte Zeitungen mit Flexodruck unzulässig, weiße Späne mit leichtem Andruck, weiße Späne mit leichtem Andruck ohne Kleberücken, weiße Späne stark bedruckt, weiße Späne stark bedruckt ohne Kleberücken, Büroaltpapier sortiert, bunte Akten, weiße Bücher holzfrei, bunte Illustrierte holzfrei, Selbstdurchschreib-Papiere, PE-beschichteter Karton gebleicht holzfrei, anderer PE-beschichteter Karton, Endlosformulare holzhaltig und Kombinationen hiervon und
aus der Gruppe 3 gemäß der Europäischen Liste der Standardsorten für Altpapier und Pappe nach CEN European Standard EN 643:2001, nämlich gemischte hellbunte Druckspäne, gemischte hellbunte Druckspäne holzfrei, Buchbinderspäne holzfrei, weiße Späne mit leichtem Andruck holzfrei, weiße Akten holzfrei, weiße Geschäftsformulare, weiße Endlosformulare holzfrei, gebleichter Sulfatkarton bedruckt, gebleichter Sulfatkarton mit leichtem Andruck, Multidruck, weißer mehrlagiger Karton stark bedruckt, weißer mehrlagiger Karton mit leichtem Andruck, weißer mehrlagiger Karton unbedruckt, weißes Zeitungsdruckpapier, weißes gestrichenes und ungestrichenes Papier holzhaltig, weißes gestrichenes Papier holzhaltig, weißes gestrichenes Papier holzfrei ohne Kleberücken, weiße Späne, weiße Späne holzfrei, weiße ungestrichene Späne holzfrei, gebleichter Sulfat-Karton unbedruckt und Kombinationen hiervon
und die Schonschicht einen Flächengewichtsbereich von 10 bis 30 g/m2 aufweist.

12. Verfahren gemäß einem der Ansprüche 10 bis 11 **dadurch gekennzeichnet, dass** die Schichten einen Feuchtegehalt von 10 bis 24 % bei der Vergautschung aufweisen.

13. Verfahren gemäß einem der Ansprüche 10 bis 12 **dadurch gekennzeichnet, dass** die Vergautschung eine Zugabe eines Verfestigers, insbesondere von synthetischen Polymeren Copolymeren auf Basis von Arcylamid und Carbonsäuren und/oder Stärke aufweist.

14. Verfahren gemäß einem der Ansprüche 10 bis 13 **dadurch gekennzeichnet, dass** die Streichfarbenzusammensetzung eine Viskosität nach Brookfield gemessen mit Spindel Nr. 3 bis 4 bei einer Temperatur von 20 bis 30 °C von 100 bis 1500 mPas aufweist.

15. Verfahren gemäß einem der Ansprüche 10 bis 14 mit dem zusätzlichen Schritt, dass das mehrlagige Verpackungspapier eine Glättung, insbesondere durch einen Softnip-Kalander aufweist.

16. Mehrlagiges Verpackungspapier gemäß einem der Ansprüche 1 bis 9, welches entsprechend einem der Verfahren nach den Ansprüchen 10 bis 15 hergestellt wurde.

17. Verwendung des mehrlagigen Verpackungspapiers gemäß einem der Ansprüche 1 bis 9 als Druckträger, insbesondere im Flexo-Preprint und - Postprint, für den Offset-, Tief-, Flexo-, Laser-, Sieb- Inkjet- und Hochdruck, als Testliner, als White Top Liner, als Wellpappenrohpapier und/oder zur Herstellung von Wellpappe und Verpackungen aus Wellpappe, insbesondere unter Verwendung als Außen- und Innendecke von Wellpappe und Verpackungen aus Wellpappe, Kombinationen hiervon.

## Claims

1. A multi-layer packaging paper, in particular a testliner for corrugated cardboard production, having a mass per unit area as per DIN EN ISO 536 of 100 to 200 g/m², having a base paper which:
- has a base layer with a first substance mixture with pulps selected from group 1 as per the European list of standard grades of recovered paper and board as per CEN European Standard EN 643:2001, specifically unsorted mixed recovered paper, sorted mixed recovered paper, grey board, supermarket corrugated paper and board, old corrugated containers, unsold magazines, unsold magazines without glue, telephone books, mixed newspapers and magazines, sorted graphic paper for de-inking, and combinations hereof, and
from group 4 according to the European list of standard grades for recovered paper and board as per CEN European Standard EN 643:2001, in particular new shavings of corrugated board, specifically unused corrugated kraft, unused corrugated board, used corrugated kraft, used kraft sacks, used kraft sacks with poly coated papers, unused kraft sacks, unused kraft sacks with poly coated papers, used kraft, new kraft, new carrier kraft, and combinations hereof, and the base layer has a mass per unit area preferably in the range between 50 to 180 g/m²;
- a top layer with a second substance mixture with pulps selected from group 2 as per the European list of standard grades for recovered paper and board as per CEN European Standard EN 643:2001, specifically newspapers, unsold newspapers, unsold newspapers, no flexographic printing allowed, lightly printed white shavings, lightly printed white shavings without glue, heavily printed white shavings, heavily printed white shavings without glue, sorted office paper, coloured letters, white wood free books, coloured wood free magazines, carbonless copy paper, bleached wood free PE-coated board, other PE-coated board, mechanical pulp-based computer print-out, and combinations thereof, and
from group 3 as per the European list of standard grades for recovered paper and board as per CEN European Standard EN 643:2001, specifically mixed lightly coloured printer shavings, mixed lightly coloured wood free printer shavings, wood free binders, white wood free lightly printed shavings, white wood free letters, white business forms, white wood free computer print-out, printed bleached sulphate board, lightly printed bleached sulphate board, multi printing, white heavily printed multi-ply board, white lightly printed multi-ply board, white unprinted multi-ply board, white newsprint, white mechanical pulp-based coated and uncoated paper, white mechanical pulp-based paper containing coated paper, white wood free coated paper, without glue, white shavings, white wood free shavings, white wood free uncoated shavings, unprinted bleached sulphate board, and combinations hereof,
and filler material and de-inked scrap paper material or CTMP;
for producing a base paper with a mass per unit area of 100 to 200 g/m² and a specific rupture pressure as per ISO 2759 of 1.85 to 2.40 kPa*m²/g and a specific SCT_{cross} direction as per ISO 9895 of 12 to 18 kNm/kg and a Scott Bond as per Tappi 569 of 160 to 320 J/m² and a D65 brightness as per ISO 2470-2 of 68 to 85 % on the top layer top side;
**characterised in that**
the base paper has, at least on the top side of the top layer, a film press pigmentation with a coat weight of 3 to 10 g/m² while having a first coat colour composition with a solid matter content of 30 to 70 % and a synthetic binding agent fraction of 5 to 30 % in relation to a pigment fraction, for producing the multi-layer packaging paper with a Bendtsen air permeability as per ISO 5636-3 of 50 to 150 ml/min, a Bendtsen roughness as per ISO 8791-2 of 150 to 500 ml/min and a D65 brightness as per ISO 2470-2 of 68 to 85 %.

2. The multi-layer packaging paper according to Claim 1, **characterised in that** the base paper comprises an underliner with a third substance mixture with at least pulps selected from group 2 as per the European list of standard grades for recovered paper and board as per CEN European Standard EN 643:2001, specifically newspapers, unsold newspapers, unsold newspapers, no flexographic printing allowed, lightly printed white shavings, lightly printed white shavings without glue, heavily printed white shavings, heavily printed white shavings without glue, sorted office paper, coloured letters, white wood free books, coloured wood free magazines, carbonless copy paper, bleached wood free PE-coated board, other PE-coated board, mechanical pulp-based computer print-out, and combinations hereof, and
from group 3 as per the European list of standard grades for recovered paper and board as per CEN European Standard EN 643:2001, specifically mixed lightly coloured printer shavings, mixed lightly coloured wood free printer shavings, wood free binders, white wood free lightly printed shavings, white wood free letters, white business forms, white wood free computer print-out, printed bleached sulphate board, lightly printed bleached sulphate board, multi printing, white heavily printed multi-ply board, white lightly printed multi-ply board, white unprinted multi-ply board, white newsprint, white mechanical pulp-based coated and uncoated paper, white mechanical pulp-based paper containing coated paper, white wood free coated paper, without glue, white shavings, white wood free shavings, white wood free uncoated shavings, unprinted bleached sulphate board, and combinations hereof,
and the underliner has a mass per unit area of 10 to 30 g/m².

3. The multi-layer packaging paper according to one of Claims 1 or 2, **characterised in that** the filler material is selected from a group of materials comprising minerals, in particular such as kaolins, talc, calcium carbonates, in particular Paris white with a scalenohedral crystal modification and a particle size distribution in more than 90 % of the particles in the range of 0.1 to 5 µm and/or powdered calcium carbonate with a particle size distribution of the particles in the range 50 to 90 % of less than 2 µm, calcium silicates, titanium dioxide, aluminium hydroxides, silicic acids, bentonites, barium sulphates, synthetic filler materials or plastic particles, dyes and combinations thereof.

4. The multi-layer packaging paper according to one of Claims 1 to 3, **characterised in that** the first coat colour composition has a solid matter content of 30 to 70 %, preferably of 55 to 65 %, and more preferably of 57 to 63 %.

5. The multi-layer packaging paper according to one of Claims 1 to 4, **characterised in that** the first paint colour composition has a synthetic binding agent fraction of 8 to 15 %, preferably of 9 to 13 %, and more preferably of 10 to 11 %, in relation to a pigment fraction.

6. The multi-layer packaging paper according to one of Claims 1 to 5, **characterised in that** the pigment fraction is selected from a group of materials comprising minerals, in particular such as kaolins, in particular kaolins with an aspect ratio in the range of 10 to 60 with a particle size distribution of the particles in the range of 55 to 80 % of less than 2 µm, talc, calcium carbonates, in particular calcium carbonates with a particle size distribution of the particles in the range 50 to 90 % of less than 2 µm, calcium silicates, titanium dioxide, aluminium hydroxides, silicic acids, bentonites, barium sulphates, synthetic fillers or plastic particles, dyes and combinations thereof.

7. The multi-layer packaging paper according to one of Claims 1 to 6, **characterised in that** a production of the layers comprises substance suspensions, which comprises further additives, in particular such as retention agents, dewatering aids, retention agent dual systems or microparticle systems, wet and dry strength agents, filler materials and/or pigments, in particular selected from a group of kaolin, talc, calcium carbonate, calcium silicate, titanium dioxide, aluminium hydroxide, silicic acid, bentonite and barium sulphate, binding agent components, coat colour components, defoaming agents, bleeders, biocide, enzymes, bleaching aids, optical brighteners, dyes, nuancing dyes, unwanted substance receptors, precipitation agents, fixing agents, wetting agents, pH regulators and combinations thereof.

8. The multi-layer packaging paper according to one of Claims 1 to 7, **characterised in that** the coat colour composition comprises further additives, such as binding agents selected from a group which in particular comprises natural binding agents, such as starch, carboxymethylcellulose, casein, guar, soya proteins, cellulose ether, plant proteins of other origin, synthetic binding agents in dispersion form and water-soluble form based on styrene-butadiene, styrene (meth)acrylate esters, vinyl acetate ethylene, vinyl acetate acrylate esters, vinyl acetate and polyvinyl alcohols, and combinations thereof, and/or
electrolytic components selected from a group comprising in particular ionogenic components, such as salts, for example sodium chloride, calcium chloride, ammonium salts, hardness-causing components in water, and combinations thereof, and/or
crosslinking agents, viscosity regulators, optical brighteners, bleeders, pH regulators, and combinations thereof.

9. The multi-layer packaging paper according to one of Claims 2 to 8, **characterised in that** the layers are arranged relative to one another in the following sequence: top layer, underliner, base layer, and, at least on the outer face of the top layer, has a pigment-containing coat.

10. A method for producing a multi-layer packaging paper by film press pigmentation of a multi-layer base paper in a paper machine, said method comprising the following steps:
➢ providing a base layer with a first substance mixture with pulps selected from group 1 as per the European list of standard grades of recovered paper and board as per CEN European Standard EN 643:2001, specifically unsorted mixed recovered paper, sorted mixed recovered paper, grey board, supermarket corrugated paper and board, old corrugated containers, unsold magazines, unsold magazines without glue, telephone books, mixed newspapers and magazines, sorted graphic paper for de-inking, and combinations hereof, and
from group 4 according to the European list of standard grades for recovered paper and board as per CEN European Standard EN 643:2001, in particular new shavings of corrugated board, specifically unused corrugated kraft, unused corrugated board, used corrugated kraft, used kraft sacks, used kraft sacks with poly coated papers, unused kraft sacks, unused kraft sacks with poly coated papers, used kraft, new kraft, new carrier kraft, and combinations hereof, and the base layer has a mass per unit area preferably in the range between 50 to 180 g/m²;
➢ providing a top layer with a second substance mixture with pulps selected from group 2 as per the European list of standard grades for recovered paper and board as per CEN European Standard EN 643:2001, specifically newspapers, unsold newspapers, unsold newspapers, no flexographic printing allowed, lightly printed white shavings, lightly printed white shavings without glue, heavily printed white shavings, heavily printed white shavings without glue, sorted office paper, coloured letters, white wood free books, coloured wood free magazines, carbonless copy paper, bleached wood free PE-coated board, other PE-coated board, mechanical pulp-based computer print-out, and combinations hereof, and
from group 3 as per the European list of standard grades for recovered paper and board as per CEN European Standard EN 643:2001, specifically mixed lightly coloured printer shavings, mixed lightly coloured wood free printer shavings, wood free binders, white wood free lightly printed shavings, white wood free letters, white business forms, white wood free computer print-out, printed bleached sulphate board, lightly printed bleached sulphate board, multi printing, white heavily printed multi-ply board, white lightly printed multi-ply board, white unprinted multi-ply board, white newsprint, white mechanical pulp-based coated and uncoated paper, white mechanical pulp-based paper containing coated paper, white wood free coated paper, without glue, white shavings, white wood free shavings, white wood free uncoated shavings, unprinted bleached sulphate board, and combinations hereof,
and filler material and de-inked scrap paper material or CTMP;
➢ providing a coat colour composition with a solid matter content of 30 to 70 % and a synthetic binding agent fraction of 5 to 30 % in relation to a pigment fraction;
➢ producing the multi-layer base paper with a mass per unit area of 100 to 200 g/m² from at least one base layer and one top layer by couching the individual layers, having a specific rupture pressure as per ISO 2759 of 1.85 to 2.40 kPa*m²/g, a specific SCT_{cross} direction (index) as per ISO 9895 of 12 to 18 kNm/kg, a Scott Bond as per Tappi 569 of 160 to 320 J/m² of the multi-layer base paper and a D65 brightness as per ISO 2470-2 of 68 to 85 % on the top layer;
➢ film press pigmenting of the multi-layer base paper in order to produce an air permeability according to ISO 5636 of 50 to 150 ml/min and a Bendtsen roughness according to ISO 8791-2 of 150 to 500 ml/min and a D65 brightness as per ISO 2470-2 of 68 to 85 %.

11. The method according to Claim 10, **characterised in that**, to cover the base layer, at least one underliner is provided with a third substance mixture with fibres selected from group 2 as per the European list of standard grades for recovered paper and board as per CEN European Standard EN 643:2001, specifically newspapers, unsold newspapers, unsold newspapers, no flexographic printing allowed, lightly printed white shavings, lightly printed white shavings without glue, heavily printed white shavings, heavily printed white shavings without glue, sorted office paper, coloured letters, white wood free books, coloured wood free magazines, carbonless copy paper, bleached wood free
PE-coated board, other PE-coated board, mechanical pulp-based computer print-out, and combinations hereof, and
from group 3 as per the European list of standard grades for recovered paper and board as per CEN European Standard EN 643:2001, specifically mixed lightly coloured printer shavings, mixed lightly coloured wood free printer shavings, wood free binders, white wood free lightly printed shavings, white wood free letters, white business forms, white wood free computer print-out, printed bleached sulphate board, lightly printed bleached sulphate board, multi printing, white heavily printed multi-ply board, white lightly printed multi-ply board, white unprinted multi-ply board, white newsprint, white mechanical pulp-based coated and uncoated paper, white mechanical pulp-based paper containing coated paper, white wood free coated paper, without glue, white shavings, white wood free shavings, white wood free uncoated shavings, unprinted bleached sulphate board, and combinations hereof,
and the underliner has a mass per unit area of 10 to 30 g/m².

12. The method according to one of Claims 10 to 11, **characterised in that** the layers have a moisture content of 10 to 24 % during the couching process.

13. The method according to one of Claims 10 to 12, **characterised in that** the couching comprises an addition of a strength agent, in particular of synthetic polymer copolymers based on acrylamide and carboxylic acids and/or starch.

14. The method according to one of Claims 10 to 13, **characterised in that** the coat colour composition has a Brookfield viscosity measured with spindle numbers 3 to 4 at a temperature of 20 to 30 °C of 100 to 1500 mPas.

15. The method according to one of Claims 10 to 14 with the additional step that the multi-layer packaging paper has a surface smoothing, in particular achieved by a soft nip calender.

16. The multi-layer packaging paper according to one of Claims 1 to 9, which has been produced in accordance with one of the methods according to Claims 10 to 15.

17. Use of the multi-layer packaging paper according to one of Claims 1 to 9 as a printing carrier, in particular in flexographic pre-printing and post-printing, for offset printing, intaglio printing, flexographic printing, laser printing, screen printing, inkjet printing and relief printing, as a testliner, as a white top liner, as a corrugated cardboard base paper and/or for producing corrugated cardboard and packagings made of corrugated cardboard, in particular with use, as an outer and inner facing, of corrugated cardboard and packagings made of corrugated cardboard, and combinations thereof.

## Revendications

1. Papier d'emballage multicouche, notamment couverture spéciale pour carton ondulé pour la fabrication de carton ondulé avec une masse surfacique selon DIN EN ISO 536 de 100 à 200 g/m² avec un papier support, qui présente :
- une couche de fond avec un premier mélange de pâte à matières fibreuses sélectionnées à partir du groupe 1 selon la Liste européenne des sortes standard de vieux papiers et cartons selon le standard européen CEN EN 643:2001, à savoir du vieux papier mixte non trié, du vieux papier mixte trié, du carton gris, du vieux papier de magasin, des vieux emballages en carton ondulé, des illustrés invendus, des illustrés invendus sans dos collé, des annuaires téléphoniques, des journaux et des illustrés mélangés, des produits de désencrage et des combinaisons de ceux-ci, et
à partir du groupe 4 selon la Liste européenne des sortes standard de vieux papiers et cartons selon le standard européen CEN EN 643:2001, notamment des nouveaux copeaux de carton ondulé, à savoir du carton ondulé kraft non utilisé, du carton ondulé non utilisé, du carton ondulé kraft utilisé, des sacs en papier kraft utilisés, des sacs en papier kraft utilisés avec des papiers à revêtement en plastique, des sacs en papier kraft non utilisés, des sacs en papier kraft non utilisés avec des papiers à revêtement en plastique, du papier kraft utilisé, du papier kraft non utilisé, du carton kraft de transport non utilisé et des combinaisons de ceux-ci, et
la couche de fond présente une zone de poids surfacique de préférence dans la zone de 50 à 180 g/m² ;
- une couche de recouvrement avec un deuxième mélange de pâte avec des matières fibreuses sélectionnées à partir du groupe 2 selon la Liste européenne des sortes standard de vieux papiers et cartons selon le standard européen CEN EN 643:2001, à savoir des journaux, des journaux invendus, des journaux invendus avec flexographie interdite, des copeaux blancs avec épreuve légère, des copeaux blancs avec épreuve légère sans dos collé, des copeaux blancs fortement imprimés, des copeaux blancs fortement imprimés sans dos collé, du vieux papier de bureau trié, des dossiers en couleur, des livres blancs sans bois, des illustrés en couleur sans bois, des papiers autocopiants, du carton à revêtement PE blanchi sans bois, un autre carton à revêtement PE, des formulaires en continu contenant du bois ainsi que des combinaisons de ceux-ci, et
à partir du groupe 3 selon la Liste européenne des sortes standard de vieux papiers et cartons selon le standard européen CEN EN 643:2001, à savoir des copeaux imprimés mixtes de couleurs claires, des copeaux imprimés mixtes de couleurs claires sans bois, des copeaux de reliure sans bois, des copeaux blancs avec épreuve légère sans bois, des dossiers blancs sans bois, des formulaires d'affaires blancs, des formulaires en continu blancs sans bois, du carton blanchi imprimé au sulfate, du carton blanchi au sulfate avec épreuve légère, une multi-impression, du carton multicouche blanc fortement imprimé, du carton multicouche blanc avec épreuve légère, du carton multicouche blanc non imprimé, du papier d'impression journal blanc, du papier couché et non couché blanc contenant du bois, du papier couché blanc contenant du bois, du papier couché blanc sans bois et sans dos collé, des copeaux blancs, des copeaux blancs sans bois, des copeaux blancs non couchés sans bois, du carton blanchi non imprimé au sulfate, ainsi que des combinaisons de ceux-ci, une matière de charge et de la pâte à vieux papier désencré ou de la CTMP ; pour la production d'un papier support avec une zone de poids surfacique de 100 à 200 g/m², une pression d'éclatement spécifique selon ISO 2759 de 1,85 à 2,40 kPa * m²/g, un test SCTₜᵣₐₙₛᵥₑᵣₛₐₗ (test transversal de compression des copeaux) spécifique selon ISO 9895 de 12 à 18 kNm / kg, une cohésion interne selon Tappi 569 de 160 à 320 J/m² et une luminosité D65 selon ISO 2470-2 de 68 à 85 % sur la face supérieure de la couche de recouvrement ;
**caractérisé en ce que**
le papier support présente au moins sur la face supérieure de la couche de recouvrement une pigmentation au presse-film avec un poids de couchage de 3 à 10 g/m², dans le cas d'une première composition de coucheuse avec une teneur en matières solides de 30 à 70 % et d'une part de liants synthétiques de 5 à 30 % par rapport à une part de pigments, en vue de la production du papier d'emballage multicouche avec une porosité selon Bendtsen selon ISO 5636-3 de 50 à 150 ml/mn, une rugosité selon Bendtsen selon ISO 8791-2 de 150 à 500 ml/mn et une luminosité D65 selon ISO 2470-2 de 68 à 85 %.

2. Papier d'emballage multicouche selon la revendication 1, **caractérisé en ce que** le papier support présente un demi-intérieur avec un troisième mélange de pâte avec au moins des matières fibreuses sélectionnées à partir du groupe 2 selon la Liste européenne des sortes standard de vieux papiers et cartons selon le standard européen CEN EN 643:2001, à savoir des journaux, des journaux invendus, des journaux invendus avec flexographie interdite, des copeaux blancs avec épreuve légère, des copeaux blancs avec épreuve légère sans dos collé, des copeaux blancs fortement imprimés, des copeaux blancs fortement imprimés sans dos collé, du vieux papier de bureau trié, des dossiers en couleur, des livres blancs sans bois, des illustrés en couleur sans bois, des papiers autocopiants, du carton à revêtement PE blanchi sans bois, un autre carton à revêtement PE, des formulaires en continu contenant du bois ainsi que des combinaisons de ceux-ci, et
à partir du groupe 3 selon la Liste européenne des sortes standard de vieux papiers et cartons selon le standard européen CEN EN 643:2001, à savoir des copeaux imprimés mixtes de couleurs claires, des copeaux imprimés mixtes de couleurs claires sans bois, des copeaux de reliure sans bois, des copeaux blancs avec épreuve légère sans bois, des dossiers blancs sans bois, des formulaires d'affaires blancs, des formulaires en continu blancs sans bois, du carton blanchi imprimé au sulfate, du carton blanchi au sulfate avec épreuve légère, une multi-impression, du carton multicouche blanc fortement imprimé, du carton multicouche blanc avec épreuve légère, du carton multicouche blanc non imprimé, du papier d'impression journal blanc, du papier couché et non couché blanc contenant du bois, du papier couché blanc contenant du bois, du papier couché blanc sans bois et sans dos collé, des copeaux blancs, des copeaux blancs sans bois, des copeaux blancs non couchés sans bois, du carton blanchi non imprimé au sulfate, ainsi que des combinaisons de ceux-ci, et le demi-intérieur qui présente une zone de poids surfacique de 10 à 30 g/m².

3. Papier d'emballage multicouche selon une quelconque des revendications 1 ou 2, **caractérisé en ce que** la matière de charge est sélectionnée à partir d'un groupe de matériaux, qui présente des minéraux, comme notamment des kaolins, du talc, du carbonate de calcium, notamment du carbonate de calcium précipité avec une modification de cristaux scalénoédrique et une répartition de la taille de particule à plus de 90 % des particules dans la zone de 0,1 à 5 µm et/ou du carbonate de calcium broyé avec une répartition de la taille des particules dans la zone de 50 à 90 % inférieure à 2 µm, des silicates de calcium, du dioxyde de titane, des hydroxydes d'aluminium, de l'acide silique, de la bentonite, des sulfates de baryum, des matières de charge synthétiques et/ou des particules de plastique, des colorants, des combinaisons de ceux-ci.

4. Papier d'emballage multicouche selon une quelconque des revendications 1 à 3, **caractérisé en ce que** la première composition de coucheuse présente une teneur en matières solides de 30 à 70 %, de préférence de 55 à 65 % et de préférence particulière de 57 à 63 %.

5. Papier d'emballage multicouche selon une quelconque des revendications 1 à 4, **caractérisé en ce que** la première composition de coucheuse présente une part de liants synthétiques de 8 à 15 %, de préférence de 9 à 13 % et de préférence particulière de 10 à 11 % par rapport à une part de pigments.

6. Papier d'emballage multicouche selon une quelconque des revendications 1 à 5, **caractérisé en ce que** la part de pigments est sélectionnée à partir d'un groupe de matériaux, qui présente des minéraux, comme notamment des kaolins, notamment des kaolins avec un aspect ratio dans la zone de 10 à 60 avec une répartition de la taille de particules dans la zone de 55 à 80 % inférieure à 2 µm, du talc, du carbonate de calcium, notamment du carbonate de calcium avec une répartition de la taille des particules dans la zone de 50 à 90 % inférieure à 2 µm, des silicates de calcium, du dioxyde de titane, des hydroxydes d'aluminium, des acides siliques, des bentonites, des sulfates de baryum, des matières de charge synthétiques et/ou des particules de plastique, des colorants, des combinaisons de ceux-ci.

7. Papier d'emballage multicouche selon une quelconque des revendications 1 à 6, **caractérisé en ce qu'**une fabrication des couches présente des suspensions de substances, qui présente d'autres additifs, comme notamment des agents de rétention, des déshydratants, des systèmes binaires d'agents de rétention ou des systèmes de microparticules, des agents durcissants mouillés ou secs, des matières de charge et/ou des pigments, sélectionnés notamment à partir d'un groupe du kaolin, du talc, du carbonate de calcium, du silicate de calcium, du dioxyde de titane, de l'hydroxyde d'aluminium, de l'acide silique, de la bentonite, du sulfate de baryum, des composants liants, des composants de coucheuse, des antimousses, des désaérants, des biocides, des enzymes, des blanchissants, des agents azurants optiques, des colorants, des colorants de nuançage, des capteurs d'impuretés, des précipitants, des fixateurs, des agents mouillants, des régulateurs de pH, des combinaisons de ceux-ci.

8. Papier d'emballage multicouche selon une quelconque des revendications 1 à 7, **caractérisé en ce que** la composition de coucheuse présente d'autres additifs, comme des liants sélectionnés à partir d'un groupe, notamment des liants naturels, comme de l'amidon, du cellulose carboxyméthylique, de la caséine, du guar, des protéines de soja, de l'éther de cellulose, des protéines végétales d'une autre origine, des liants synthétiques sous forme de dispersion ainsi qu'une forme soluble dans l'eau à base de styrène-butadiène, des esters (méth)acrylates de styrène, des éthylènes d'acétate de vinyle, des esters acrylates d'acétate de vinyle, de l'acétate de vinyle ainsi que des alcools de polyvinyle, des combinaisons de ceux-ci, et/ou
des composants électrolytiques sélectionnés à partir d'un groupe, notamment des composants ionogènes comme les sels, par exemple du chlorure de sodium, du chlorure de calcium, des sels d'ammonium, des composants durcissants dans l'eau, des combinaisons de ceux-ci et/ou
des agents mouillants, des agents régulateurs de viscosité, des agents azurants optiques, des désaérants, des régulateurs de pH, des combinaisons de ceux-ci

9. Papier d'emballage multicouche selon une quelconque des revendications 2 à 8, **caractérisé en ce que** les couches sont disposées l'une par rapport à l'autre dans l'ordre de la couche de recouvrement, du demi-intérieur et de la couche de fond, et **en ce qu'**au moins la face extérieure de la couche de recouvrement présente un trait contenant des pigments.

10. Procédé destiné à la fabrication d'un papier d'emballage multicouche par pigmentation au presse-film d'un papier support multicouche dans une machine à papier avec les étapes de :
➢ Mise à disposition d'une couche de fond avec un premier mélange de pâte avec des matières fibreuses sélectionnées à partir du groupe 1 selon la Liste européenne des sortes standard de vieux papiers et cartons selon le standard européen CEN EN 643:2001, à savoir du vieux papier mixte non trié, du vieux papier mixte trié, du carton gris, du vieux papier de magasin, des vieux emballages en carton ondulé, des illustrés invendus, des illustrés invendus sans dos collé, des annuaires téléphoniques, des journaux et des illustrés mélangés, des produits de désencrage et des combinaisons de ceux-ci, et
à partir du groupe 4 selon la Liste européenne des sortes standard de vieux papiers et cartons selon le standard européen CEN EN 643:2001, à savoir des nouveaux copeaux de carton ondulé, du carton ondulé kraft non utilisé, du carton ondulé non utilisé, du carton ondulé kraft utilisé, des sacs en papier kraft utilisés, des sacs en papier kraft utilisés avec des papiers à revêtement en plastique, des sacs en papier kraft non utilisés, des sacs en papier kraft non utilisés avec des papiers à revêtement en plastique, du papier kraft utilisé, du papier kraft non utilisé, du carton kraft de transport non utilisé et des combinaisons de ceux-ci, et
la couche de fond présente une zone de poids surfacique de préférence dans la zone de 50 à 180 g/m² ;
➢ Mise à disposition d'une couche de recouvrement avec un deuxième mélange de pâte avec des matières fibreuses sélectionnées à partir du groupe 2 selon la Liste européenne des sortes standard de vieux papiers et cartons selon le standard européen CEN EN 643:2001, à savoir des journaux, des journaux invendus, des journaux invendus avec flexographie interdite, des copeaux blancs avec épreuve légère, des copeaux blancs
avec épreuve légère sans dos collé, des copeaux blancs fortement imprimés, des copeaux blancs fortement imprimés sans dos collé, du vieux papier de bureau trié, des dossiers en couleur, des livres blancs sans bois, des illustrés en couleur sans bois, des papiers autocopiants, du carton à revêtement PE blanchi sans bois, un autre carton à revêtement PE, des formulaires en continu contenant du bois ainsi que des combinaisons de ceux-ci, et
à partir du groupe 3 selon la Liste européenne des sortes standard de vieux papiers et cartons selon le standard européen CEN EN 643:2001, à savoir des copeaux imprimés mixtes de couleurs claires, des copeaux imprimés mixtes de couleurs claires sans bois, des copeaux de reliure sans bois, des copeaux blancs avec épreuve légère sans bois, des dossiers blancs sans bois, des formulaires d'affaires blancs, des formulaires en continu blancs sans bois, du carton blanchi imprimé au sulfate, du carton blanchi au sulfate avec épreuve légère, une multi-impression, du carton multicouche blanc fortement imprimé, du carton multicouche blanc avec épreuve légère, du carton multicouche blanc non imprimé, du papier d'impression journal blanc, du papier couché et non couché blanc contenant du bois, du papier couché blanc contenant du bois, du papier couché blanc sans bois et sans dos collé, des copeaux blancs, des copeaux blancs sans bois, des copeaux blancs non couchés sans bois, du carton blanchi non imprimé au sulfate, ainsi que des combinaisons de ceux-ci, une matière de charge et de la pâte à vieux papier désencré ou de la CTMP ;
➢ Mise à disposition d'une composition de coucheuse avec une teneur en matières solides de 30 à 70 % et une part de liants synthétiques de 5 à 30 % par rapport à une part de pigments ;
➢ Fabrication du papier support multicouche avec une zone de poids surfacique de 100 à 200 g/m² à partir d'au moins une couche de fond et une couche de recouvrement par couchage des différentes couches, présentant une pression d'éclatement spécifique selon ISO 2759 de 1,85 à 2,40 kPa * m²/g, un test SCTtransversal (test transversal de compression des copeaux) spécifique selon ISO 9895 de 12 à 18 kNm / kg, une cohésion interne selon Tappi 569 de 160 à 320 J/m² du papier support multicouche et une luminosité D65 selon ISO 2470-2 de 68 à 85 % sur la couche de recouvrement ;
➢ Pigmentation au presse-film du papier support multicouche en vue de la création d'une porosité selon ISO 5636 de 50 à 150 ml/min, d'une rugosité selon Bendtsen selon ISO 8791-2 de 150 à 500 ml/min et d'une luminosité D65 selon ISO 2470-2 de 68 à 85 % ;

11. Procédé selon la revendication 10, **caractérisé en ce que**, pour le recouvrement de la couche de fond, au moins un demi-intérieur est mis à disposition avec un troisième mélange de pâte avec des matières fibreuses sélectionnées à partir du groupe 2 selon la Liste européenne des sortes standard de vieux papiers et cartons selon le standard européen CEN EN 643:2001, à savoir des journaux, des journaux invendus, des journaux invendus avec flexographie interdite, des copeaux blancs avec épreuve légère, des copeaux blancs avec épreuve légère sans dos collé, des copeaux blancs fortement imprimés, des copeaux blancs fortement imprimés sans dos collé, du vieux papier de bureau trié, des dossiers en couleur, des livres blancs sans bois, des illustrés en couleur sans bois, des papiers autocopiants, du carton à revêtement PE blanchi sans bois, un autre carton à revêtement PE, des formulaires en continu contenant du bois ainsi que des combinaisons de ceux-ci, et
à partir du groupe 3 selon la Liste européenne des sortes standard de vieux papiers et cartons selon le standard européen CEN EN 643:2001, à savoir des copeaux imprimés mixtes de couleurs claires, des copeaux imprimés mixtes de couleurs claires sans bois, des copeaux de reliure sans bois, des copeaux blancs avec épreuve légère sans bois, des dossiers blancs sans bois, des formulaires d'affaires blancs, des formulaires en continu blancs sans bois, du carton blanchi imprimé au sulfate, du carton blanchi au sulfate avec épreuve légère, une multi-impression, du carton multicouche blanc fortement imprimé, du carton multicouche blanc avec épreuve légère, du carton multicouche blanc non imprimé, du papier d'impression journal blanc, du papier couché et non couché blanc contenant du bois, du papier couché blanc contenant du bois, du papier couché blanc sans bois et sans dos collé, des copeaux blancs, des copeaux blancs sans bois, des copeaux blancs non couchés sans bois, du carton blanchi non imprimé au sulfate, ainsi que des combinaisons de ceux-ci, et le demi-intérieur qui présente une zone de poids surfacique de 10 à 30 g/m2.

12. Procédé selon une quelconque des revendications 10 à 11, **caractérisé en ce que** les couches présentent une teneur d'humidité de 10 à 24 % lors du couchage.

13. Procédé selon une quelconque des revendications 10 à 12, **caractérisé en ce que** le couchage présente une addition d'un agent de durcissement, notamment de polymères synthétiques, de copolymères à base d'arcylamides et d'acides carboniques et/ou d'amidon.

14. Procédé selon une quelconque des revendications 10 à 13, **caractérisé en ce que** la composition de coucheuse, avec un axe n° 3 à 4 et à une température de 20 à 30 °C, présente une viscosité mesurée selon Brookfield de 100 à 1500 mPas.

15. Procédé selon une quelconque des revendications 10 à 14, avec l'étape supplémentaire que le papier d'emballage multicouche présente un lissage, notamment par une calandre à revêtement mou.

16. Papier d'emballage multicouche selon une quelconque des revendications 1 à 9, qui a été fabriqué selon un quelconque des procédés selon une quelconque des revendications 10 à 15.

17. Utilisation du papier d'emballage multicouche selon une quelconque des revendications 1 à 9 comme support d'impression, notamment en preprint et en postprint flexo, pour l'impression offset, l'héliogravure, la flexographie, l'impression à laser, la sérigraphie, l'impression à jet d'encre et la typographie, comme couverture spéciale pour carton ondulé, comme feuille White Top, comme papier support de carton ondulé, et/ou pour la fabrication de carton ondulé et d'emballages en carton ondulé, notamment en utilisant la couverture extérieure et la couverture intérieure de carton ondulé et des emballages en carton ondulé, des combinaisons de ceux-ci.
